# EUROPEAN PATENT SPECIFICATION

(11) **EP 3 653 581 B1**
(45) Date of publication and mention of the grant of the patent: **01.07.2026**
(21) Application number: 18832864.5
(22) Date of filing: 03.07.2018
(51) Int. Cl.: C01G 53/00, H01M 4/36, H01M 4/505, H01M 4/525

(54) **METAL COMPOSITE HYDROXIDE, METHOD FOR PRODUCING SAME, POSITIVE ELECTRODE ACTIVE MATERIAL FOR NONAQUEOUS ELECTROLYTE SECONDARY BATTERIES, METHOD FOR PRODUCING SAID POSITIVE ELECTRODE ACTIVE MATERIAL, AND NONAQUEOUS ELECTROLYTE SECONDARY BATTERY USING SAID POSITIVE ELECTRODE ACTIVE MATERIAL**
METALLVERBUNDHYDROXID, VERFAHREN ZUR HERSTELLUNG DAVON, POSITIVELEKTRODENAKTIVMATERIAL FÜR SEKUNDÄRBATTERIE MIT WASSERFREIEN ELEKTROLYTEN, VERFAHREN ZUR HERSTELLUNG DES BESAGTEN POSITIVELEKTRODENAKTIVMATERIALS UND SEKUNDÄRBATTERIE MIT WASSERFREIEN ELEKTROLYTEN MIT VERWENDUNG DES BESAGTEN POSITIVELEKTRODENAKTIVMATERIALS
HYDROXYDE COMPOSITE MÉTALLIQUE, SA MÉTHODE DE PRODUCTION, MATÉRIAU ACTIF D'ÉLECTRODE POSITIVE POUR BATTERIES SECONDAIRES À ÉLECTROLYTE NON AQUEUX, MÉTHODE DE PRODUCTION DUDIT MATERIAU ACTIF D'ELECTRODE POSITIVE ET BATTERIE SECONDAIRE À ÉLECTROLYTE NON AQUEUX UTILISANT LEDIT MATERIAU ACTIF D'ELECTRODE POSITIVE

(30) Priority: 12.07.2017 JP 2017136324; 08.03.2018 JP 2018041799
(43) Date of publication of application: 20.05.2020
(73) Proprietor: Sumitomo Metal Mining Co., Ltd., Tokyo 105-8716 (JP)
(72) Inventor: TAKAHASHI, Tatsuya, Niihama-shi Ehime 792-0002 (JP); SENBA, Hiroko, Niihama-shi Ehime 792-0002 (JP); AIDA, Taira, Niihama-shi Ehime 792-0002 (JP)
(74) Representative: Müller-Boré & Partner Patentanwälte PartG mbB
(86) International application number: PCT/JP2018/025264
(87) International publication number: WO 2019/013053

(56) References cited:
- EP-A1- 2 653 447
- EP-A1- 2 717 361
- WO-A1-2012/131881
- WO-A1-2012/164763
- JP-A- 2016 210 674

## Description

### Technical Field

The present invention relates to a metal composite hydroxide and a method for producing the same, a positive electrode active material for non-aqueous electrolyte secondary battery and a method for producing the same, and a non-aqueous electrolyte secondary battery using the same.

### Background Art

In recent years, development of small-sized and lightweight non-aqueous electrolyte secondary batteries having a high energy density is strongly desired in association with the widespread use of portable electronic devices such as mobile phones and notebook computers. In addition, development of high-output secondary batteries is strongly desired as a power source for driving vehicles such as hybrid electric vehicles, plug-in hybrid electric vehicles, and battery-powered electric vehicles.

As secondary batteries satisfying such requirements, there are lithium ion secondary batteries which are a kind of non-aqueous electrolyte secondary battery. Lithium ion secondary batteries are equipped with a negative electrode, a positive electrode, an electrolyte and the like, and a material capable of de-inserting and inserting lithium is used as an active material used as a material for the negative electrode and positive electrode.

Among lithium ion secondary batteries, lithium ion secondary batteries in which a layered or spinel type lithium-metal composite oxide is used as the positive electrode active material can provide a voltage of 4 V class and thus are currently being actively researched and developed as batteries having a high energy density, and some of them are being put into practical use.

As a positive electrode active material of such lithium ion secondary batteries, lithium-metal composite oxides such as lithium cobalt composite oxide (LiCoO₂) that is relatively easily synthesized, lithium nickel composite oxide (LiNiO₂) using nickel that is cheaper than cobalt, lithium nickel cobalt manganese composite oxide (LiNi_{1/3}Co_{1/3}Mn_{1/3}O₂), lithium manganese composite oxide (LiMn₂O₄) using manganese, and lithium nickel manganese composite oxide (LiNi_{0.5}Mn_{0.5}O₂) have been proposed.

Meanwhile, a method is generally known in which the specific surface area of the positive electrode active material is increased in order to further improve the output characteristics of lithium ion secondary battery. When the specific surface area of the positive electrode active material is increased, the reaction area with the electrolyte solution can be sufficiently secured when the positive electrode active material is incorporated into the secondary battery. Accordingly, several techniques for improving output characteristics by controlling the particle structure of positive electrode active material have been proposed.

For example, Patent Literatures 1 to 3 and 10 propose a method for producing a positive electrode active material using a composite hydroxide obtained by a crystallization process performed in two stages as a precursor. The positive electrode active materials described in these Patent Literatures are said to have a high specific surface area and excellent output characteristics as they have a small particle size, narrow particle size distribution, and a hollow structure or a space section inside the particles. However, a positive electrode active material exhibiting higher output characteristics is required, for example, as a power source for driving vehicles such as hybrid vehicles.

On the other hand, addition of dissimilar elements to the lithium-metal composite oxide constituting a positive electrode active material has been investigated as a means for decreasing the reaction resistance and realizing a positive electrode active material exhibiting higher output characteristics. As such dissimilar elements, for example, transition metals capable of taking a high valence such as Mo, Nb, W, and Ta have been proposed.

For example, in Patent Literature 4, a lithium-transition metal-based compound powder is described which contains a lithium-transition metal-based compound having a function capable of inserting and de-inserting lithium ions as a main component and is obtained by adding at least one or more additives for suppressing particle growth and sintering when firing to the main component raw material at a proportion of 0.01 mol% or more and less than 2 mol% with respect to the total molar amount of transition metal elements in the main component raw material and then performing firing. Moreover, it is described that the additive is an oxide containing at least one or more elements selected from Mo, W, Nb, Ta, and Re and the atomic ratio of the sum of the additive elements with respect to the sum of the metal elements other than Li and additive elements at the surface portion of the primary particles is 5 times or more the atomic ratio of the whole particles.

Moreover, in Patent Literature 5, a production method is proposed in which fine particles containing lithium tungstate represented by any of Li₂WO₄, Li₄WO₅, or Li₆W₂O₉ are formed on the surface of the lithium-metal composite oxide powder or the surface of primary particles of the powder by performing a process of adding an alkaline aqueous solution in which a tungsten compound is dissolved at a specific proportion to a lithium-metal composite oxide powder and mixing these together to disperse W on the surface of primary particles of this powder and subjecting the mixed alkaline aqueous solution in which a tungsten compound is dissolved and the lithium-metal composite oxide powder to a thermal treatment in a range of 100°C to 800°C.

Moreover, in Patent Literature 6, a positive electrode active material is proposed which is a positive electrode active material containing a lithium-metal composite oxide, includes primary particles and secondary particles formed by aggregation of primary particles, and has a compound layer which contains concentrated tungsten and lithium and has a thickness of 20 nm or less on the surface or at grain boundary of lithium-metal composite oxide as well as has voids through which the electrolyte solution can penetrate in the vicinity of and inside the surface of secondary particles. Moreover, as a preferable method for obtaining the powder, it is described that a lithium-metal composite oxide can be obtained by mixing a tungsten compound together when mixing a composite hydroxide or a composite oxide with a lithium compound and performing firing. Moreover, in the method, it is said that the particle size of tungsten compound is preferably set to be 1/5 time or less the average particle size of the composite hydroxide (manganese composite hydroxide) or composite oxide (manganese composite oxide).

Moreover, Patent Literature 7 proposes a method for producing a transition metal composite hydroxide, which includes a process of producing composite hydroxide particles by separating the nuclear generation process and the particle growth stage by pH control in the crystallization reaction and a coating process of forming a coating containing tungsten on the surface of the composite hydroxide particles obtained, and a positive electrode active material obtained using the hydroxide as a precursor.

Moreover, Patent Literature 8 proposes a positive electrode for lithium secondary battery, in which a layer of a first positive electrode active material represented by Liₓ₁Niₐ₁Mn_{b1}Co_{c1}O₂ (where 0.2 ≤ x1 ≤ 1.2, 0.6 ≤ a1 ≤ 0.9, 0 ≤ b1 ≤ 0.3, 0.05 ≤ c1 ≤ 0.3, and a1 + b1 + c1 = 1.0) is attached to the surface of a collector and a layer of a second positive electrode active material represented by Liₓ₂Niₐ₂Mn_{b2}Co_{c2}M_{d}O₂ (where M is Mo, W, or Nb, 0.2 ≤ x2 ≤ 1.2, 0.7 ≤ a2 ≤ 0.9, 0 ≤ b2 ≤ 0.3, 0.05 ≤ c2 ≤ 0.3, 0.02 ≤ d ≤ 0.06, and a2 + b2 + c2 + d = 1.0.) is attached to the surface of the first positive electrode active material.

Moreover, Patent Literature 9 proposes a method for producing a nickel cobalt composite hydroxide, which includes a first crystallization process of obtaining nickel cobalt composite hydroxide particles by separately and simultaneously supplying a solution containing nickel, cobalt, and manganese, a complex ion forming agent, and a basic solution to one reaction vessel and a second crystallization process of crystallizing composite hydroxide particles containing nickel, cobalt, manganese, and element M (at least one or more elements selected from the group consisting of Al, Mg, Ca, Ti, Zr, Nb, Ta, Cr, Mo, W, Fe, Cu, Si, Sn, Bi, Ga, Y, Sm, Er, Ce, Nd, La, Cd, and Lu) on the nickel cobalt composite hydroxide particles by further separately and simultaneously supplying a solution containing nickel, cobalt, and manganese, a complex ion forming agent, a basic solution, and a solution containing element M after the first crystallization process and in which 0.30 ≤ MOL(1)/{MOL(1) + MOL(2)} < 0.95, where MOL (1) denotes the total mole of nickel, cobalt, and manganese supplied in the first crystallization process and MOL (2) denotes the total mole of nickel, cobalt, and manganese supplied in the second crystallization process.

### Citation List

### Patent Literature

Patent Literature 1: JP 2012-246199 A
Patent Literature 2: JP 2013-147416 A
Patent Literature 3: JP 2016-094307 A
Patent Literature 4: JP 2008-305777 A
Patent Literature 5: JP 2013-125732 A
Patent Literature 6: JP 2014-197556 A
Patent Literature 7: JP 2012-252844 A
Patent Literature 8: JP 2012-079608 A
Patent Literature 9: JP 2016-210674 A
Patent Literature 10: WO 2012/131881 A

### Summary of Invention

### Technical Problem

However, in the method described in Patent Literature 4, there is a problem that some of the additive elements such as Mo, Ta, and W are substituted with Ni disposed in a layered form in crystal and the battery characteristics such as battery capacity and cycle characteristics deteriorate.

Moreover, in the lithium-metal composite oxide fabricated by the production method described in Patent Literature 5, the output characteristics are improved but the cycle characteristics are not sufficient in some cases when the thickness of tungsten fine particles formed on the particle surface is not uniform.

Moreover, the method described in Patent Literature 6 is not industrially suitable and is not easy to handle since it is necessary to once grind the tungsten compound in order to obtain a tungsten compound in nano order. Moreover, the thickness of the compound layer varies as the particle sizes of the fine particles obtained are non-uniform, thus the reaction resistance is not sufficiently decreased, and the effect of improving the output characteristics is limited. Moreover, it is also described that tungsten is contained in the composite hydroxide (manganese composite hydroxide) as an additive element in order to obtain the powder, but it is difficult to form a compound layer containing concentrated tungsten in nano order by this method.

In addition, the method described in Patent Literature 7 is not industrially preferable since a process of coating tungsten is added and the number of processes increases. In addition, tungsten is deposited by controlling the pH in the coating process, but the thickness of coating layer is not uniform by the fluctuation of controlled pH, and it is thus difficult to uniformly coat tungsten. In addition, there is a problem that the coating layer of tungsten becomes resistance and the output rather decreases in the case of using a composite oxide obtained by mixing lithium and a composite hydroxide non-uniformly coated with tungsten.

Moreover, the positive electrode active material fabricated by the method described in Patent Literature 8 has a problem that there is divergence in the structural change at the time of the charge and discharge reaction when being used in a secondary battery since the first positive electrode active material and the second positive electrode active material are different phases, cracking occurs while charge and discharge is repeated, and cycle characteristics deteriorate.

Moreover, it is described that the composite hydroxide and positive electrode active material obtained by the method described in Patent Literature 9 has a peak of element M (for example, tungsten) by SEM-EDX spectrum in the second layer having a depth proportion in the radial direction of 5% or more and less than 50%, the element M including tungsten is contained in the inner side than the surface layer of the secondary particles in the positive electrode active material, and thus there is a possibility that the crystallinity decreases and the battery characteristics decrease when being used in a secondary battery.

In view of such problems, an object of the present invention is to provide a positive electrode active material having decreased reaction resistance and higher output when being used in a positive electrode of a secondary battery, and high crystallinity, a metal composite hydroxide that is a precursor thereof, and a method for producing these.

### Solution to Problem

The subject matter of the present invention is defined in the appended set of claims.

### Advantageous Effects of Invention

According to the present invention, it is possible to provide a positive electrode active material having decreased reaction resistance and higher output when being used in a positive electrode of a secondary battery, and high crystallinity, and a metal composite hydroxide that is a precursor thereof. Moreover, according to the present invention, it is possible to provide a secondary battery containing such a positive electrode active material. Furthermore, according to the present invention, it is possible to provide a method capable of easily producing such positive electrode active material and metal composite hydroxide on an industrial scale. For this reason, the industrial significance of the present invention is extremely great.

### Brief Description of Drawings

Fig. 1(A) and Fig. 1(B) are schematic diagrams illustrating an example of a metal composite hydroxide.
Fig. 2 is a diagram illustrating an example of a method for producing a metal composite hydroxide.
Fig. 3 is a diagram illustrating an example of a method for producing a metal composite hydroxide.
Fig. 4(A) and Fig. 4(B) are diagrams for explaining a start point of addition of an aqueous solution containing tungsten.
Fig. 5(A) to Fig. 5(D) are schematic diagrams illustrating an example of a lithium-metal composite oxide.
Fig. 6 is a diagram illustrating an example of a method for producing a lithium-metal composite oxide.
Fig. 7 is a schematic diagram illustrating a coin-type battery for evaluation used in Examples.
Fig. 8(A) is a drawing-substituting photograph (upper diagram) illustrating distribution of W by surface analysis of a metal composite hydroxide obtained in Example 4 using EDX. Fig. 8(B) is an explanatory diagram (lower diagram) for explaining a tungsten-concentrated layer in the drawing-substituting photograph.
Fig. 9 is an example of a SEM image of a cross section illustrating a metal composite hydroxide obtained in Examples.
Fig. 10 is a drawing-substituting photograph illustrating distribution of W by surface analysis of a lithium-metal composite oxide obtained in Example 4 using EDX.

### Description of Embodiments

Hereinafter, a metal composite hydroxide and a method for producing the same, a positive electrode active material for non-aqueous electrolyte secondary battery and a method for producing the same, and a non-aqueous electrolyte secondary battery according to embodiments will be described with reference to the drawings. It should be noted that the present invention is not limited to the embodiments to be described below. In addition, in the drawings, some parts are emphasized or some parts are simplified, and actual structures, shapes, scales, and the like may be different in order to facilitate understanding of each configuration.

### 1. Metal composite hydroxide

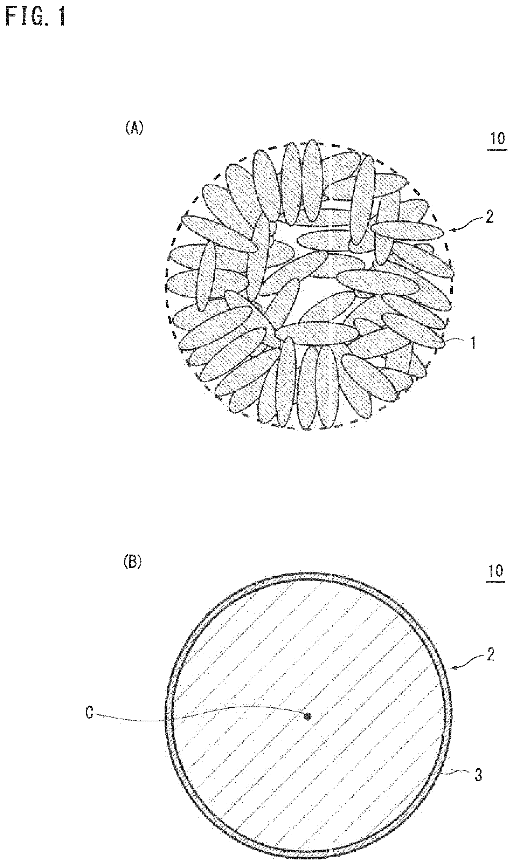

Fig. 1(A) and Fig. 1(B) are schematic diagrams illustrating an example of a metal composite hydroxide according to the present embodiment. As illustrated in Fig. 1(A), a metal composite hydroxide 10 includes secondary particles 2 formed by aggregation of a plurality of primary particles 1. The shape of the primary particles 1 constituting the secondary particles 2 is not particularly limited but may be, for example, a plate shape or a needle shape, and the primary particles 1 may be fine primary particles smaller than these. Incidentally, the metal composite hydroxide 10 may include single primary particles 1 in a small amount. Hereinafter, the details of the metal composite hydroxide 10 will be described with reference to Fig. 1(A) and Fig. 1(B).

### (Tungsten-concentrated layer)

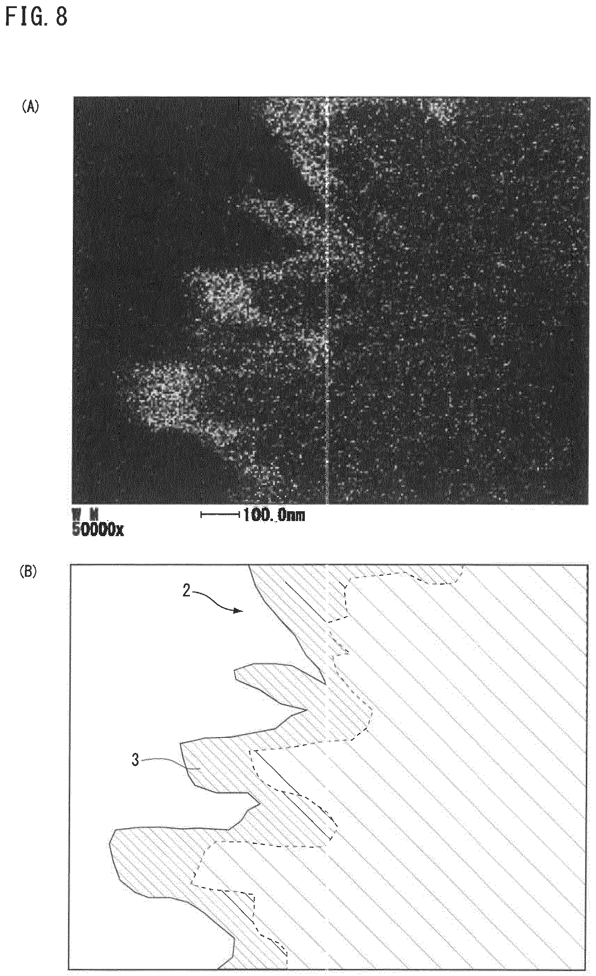

As illustrated in Fig. 1(B), the metal composite hydroxide 10 (secondary particles 2) has a tungsten-concentrated layer 3 in which tungsten is concentrated on the surface layer. The tungsten-concentrated layer 3 is formed on the surface (surface layer) of the metal composite hydroxide 10 and refers to a layered region in which tungsten is concentrated more than inside the particles. When the metal composite hydroxide 10 on which the tungsten-concentrated layer 3 is formed is used as a precursor, a positive electrode active material exhibiting high crystallinity, decreased reaction resistance, and a high output can be obtained. The tungsten-concentrated layer 3 can be confirmed by detecting the W distribution by surface analysis using an energy dispersive X-ray analyzer (EDX), for example, as illustrated in Fig. 8(A) and Fig. 8(B). Incidentally, in Fig. 1(B), the primary particles 1 are not illustrated.

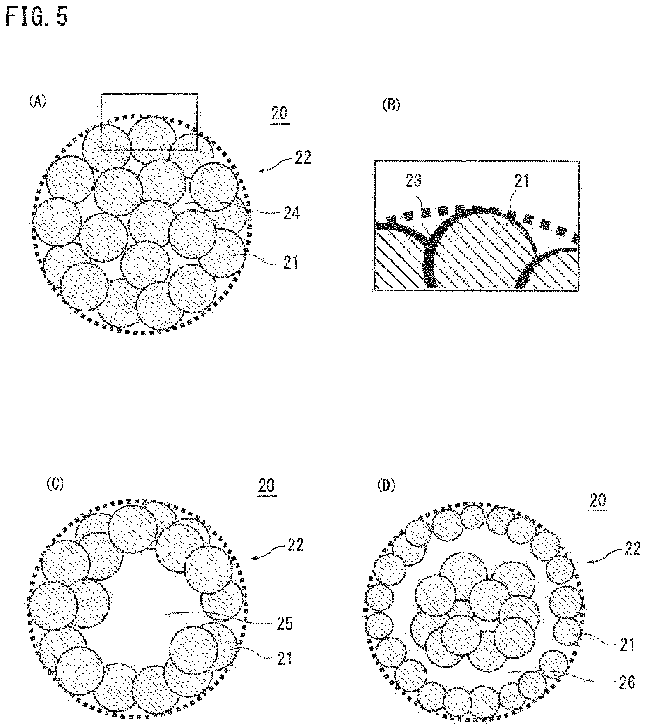

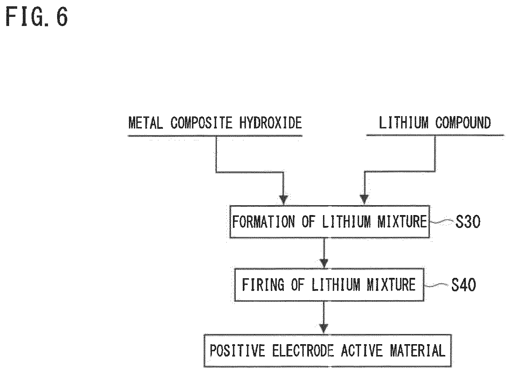

As will be described later, the tungsten-concentrated layer 3 forms a compound 23 (for example, lithium tungstate) containing tungsten and lithium in a lithium-metal composite oxide 20 (see Fig. 5). The compound 23 containing tungsten and lithium is formed (see Fig. 6) in the process of obtaining the lithium-metal composite oxide 20 (see Fig. 5) by mixing and firing the metal composite hydroxide 10 (precursor) and a lithium compound.

In the lithium-metal composite oxide 20 (positive electrode active material), the compound 23 containing tungsten and lithium is formed on the surface layer of primary particles 21 or at the grain boundary between the primary particles 21, for example, as illustrated in Fig. 5(A) and Fig. 5(B). The compound 23 containing tungsten and lithium has a high ionic conductivity and thus the presence of the compound 23 containing tungsten and lithium on the surface layer of the primary particles 21 or at the grain boundary between the primary particles 21 to be in contact with the electrolyte solution decreases the reaction resistance of the positive electrode active material and can greatly contributes to the output improvement when the lithium-metal composite oxide 20 (positive electrode active material) is used in the positive electrode of a secondary battery.

Incidentally, when a conventional method for producing a metal composite hydroxide containing tungsten is used, tungsten contained in the metal composite hydroxide (precursor) may suppress sintering when firing. For this reason, the conventional precursor containing tungsten has a contradictory problem that the crystallinity of the lithium-metal composite oxide constituting the positive electrode active material decreases while tungsten in the positive electrode active material obtained contributes to a decrease in reaction resistance, and it is thus difficult to realize a lithium-metal composite oxide exhibiting excellent output characteristics and high crystallinity. However, in the metal composite hydroxide 10 according to the present embodiment, the tungsten-concentrated layer 3 is formed on the surface layer, and thus the effect of suppressing sintering by tungsten hardly occurs when firing but it is possible to decrease the reaction resistance and to enhance the crystallinity of the lithium-metal composite oxide 20 obtained.

The thickness of the tungsten-concentrated layer 3 is 10 nm or more and 100 nm or less, and preferably 20 nm or more and 50 nm or less in the direction from the surface of the metal composite hydroxide 10 toward a center C. When the thickness of the tungsten-concentrated layer 3 is 100 nm or less, the crystallinity of the lithium-metal composite oxide 20 can be further enhanced and it is possible to further decrease the reaction resistance and to improve the output characteristics when the lithium-metal composite oxide 20 is used in the positive electrode of a secondary battery.

Incidentally, the thickness of the tungsten-concentrated layer 3 can be measured by cutting the metal composite hydroxide 10 embedded in a resin and the like to fabricate a sample of secondary particle 2 cross section and performing surface analysis of the W distribution using EDX. Specifically, in a sample of secondary particle 2 cross section, twenty secondary particle 2 cross sections to be 80% or more of the volume average particle diameter (MV) measured using a laser light diffraction scattering particle size analyzer are randomly selected, the thickness (width) of the portion (tungsten-concentrated layer 3) at which W is densely detected at 5 or more locations in the direction from the surface of the metal composite hydroxide 10 toward the center C in each of the selected secondary particle 2 cross sections, and the average thickness of the tungsten-concentrated layer 3 in each secondary particle 2 is determined. Thereafter, the average thickness values of the respective 20 secondary particles 2 selected are calculated, whereby the thickness of the tungsten-concentrated layer 3 can be attained.

Incidentally, when the thickness of the tungsten-concentrated layer 3 exceeds 100 nm, the effect of suppressing sintering by tungsten is enhanced when firing and the growth of primary particles may be inhibited. Hence, in the lithium-metal composite oxide 20 obtained, a great number of primary particles 21 having a small crystallite diameter are formed, and a great number of crystal grain boundaries are generated, thus the reaction resistance in the positive electrode may increase. Moreover, as the growth of the primary particles 21 is suppressed, the crystallinity of the lithium-metal composite oxide 20 may decrease.

On the other hand, when the thickness of the tungsten-concentrated layer 3 is less than 10 nm, the specific surface area increases, and the metal composite hydroxides 10 easily aggregate when firing, thus the packing density of the obtained lithium-metal composite oxide 20 (positive electrode active material) may decrease, and the battery capacity per volume may decrease. In addition, the compound 23 containing tungsten and lithium may not be sufficiently formed in the lithium-metal composite oxide 20 and the lithium ion conductivity may not be sufficient.

Moreover, the thickness of the tungsten-concentrated layer 3 can be, for example, 3% or less with respect to the average particle size of the metal composite hydroxide 10 in the direction from the surface of secondary particles 2 toward the center C of the secondary particles 2. Moreover, the thickness of the tungsten-concentrated layer 3 is preferably 2% or less, more preferably 0.1% or more and 2% or less, more preferably 0.1% or more and 1% or less, and still more preferably 0.1% or more and 0.5% or less from the viewpoint of further improving the crystallinity of the lithium-metal composite oxide 20 and further decreasing the reaction resistance. Incidentally, the average particle size of the metal composite hydroxide 10 refers to the volume average particle diameter (MV).

### (Average particle size)

The average particle size of the metal composite hydroxide 10 is not particularly limited but is preferably 4.0 µm or more, more preferably 4.0 µm or more and 9.0 µm or less, and still more preferably 4.0 µm or more and 7 µm or less. The average particle size of the metal composite hydroxide 10 correlates with the average particle size of the lithium-metal composite oxide 20 (positive electrode active material) formed using this metal composite hydroxide 10 as a precursor. For this reason, the average particle size of the lithium-metal composite oxide 20 (see Fig. 5) formed using this metal composite hydroxide 10 as a precursor can also be controlled to the above range by controlling the average particle size of the metal composite hydroxide 10 to the above range.

When the average particle size of the metal composite hydroxide 10 is less than 4.0 µm, the specific surface area increases, and particles of the metal composite hydroxides 10 easily aggregate in the firing process (step S40, see Fig. 6) when the positive electrode active material is produced, the packing density of the obtained positive electrode active material decreases, and the battery capacity per volume decreases in some cases. Incidentally, in the present specification, the average particle size of the metal composite hydroxide 10 means the volume average particle diameter (MV) and can be determined, for example, from a volume integrated value measured using a laser light diffraction scattering particle size analyzer.

### (Particle size distribution)

[(d90 - d10)/average particle size], which is an index indicating the spread of particle size distribution of the metal composite hydroxide 10, is 0.65 or less. The particle size distribution of the lithium-metal composite oxide 20 (positive electrode active material) is strongly affected by the metal composite hydroxide 10 that is a precursor of the lithium-metal composite oxide 20. For this reason, the lithium-metal composite oxide 20 also contains a great number of fine particles and coarse particles when the metal composite hydroxide 10 containing a great number of fine particles and coarse particles is used as a precursor. In a secondary battery fabricated using such a lithium-metal composite oxide 20 as a positive electrode active material, battery characteristics such as thermal stability, cycle characteristics, and output characteristics may decrease. Hence, when [(d90 - d10)/average particle size] of the metal composite hydroxide 10 is adjusted to the above range, the particle size distribution of the lithium-metal composite oxide 20 obtained using this as a precursor can be narrowed and the contamination with fine particles and coarse particles can be suppressed.

Moreover, the lower limit of [(d90 - d10)/average particle size] of the metal composite hydroxide 10 is not particularly limited but is preferably about 0.25 or more from the viewpoint of cost and productivity. In the case of assuming production on an industrial scale, it is not realistic to use the metal composite hydroxide 10 having an excessively small [(d90 - d10)/average particle size].

Incidentally, d10 means the particle size at which the accumulated volume is 10% of the total volume of all particles when the number of particles in each particle size is accumulated from the smaller particle size side, and d90 means a particle size at which the accumulated volume is 90% of the total volume of all particles when the number of particles is accumulated from the smaller particle size side in the same manner. Moreover, d10 and d90 can be determined from the volume integrated value measured using a laser light diffraction scattering particle size analyzer in the same manner as the average particle size.

### (Particle structure)

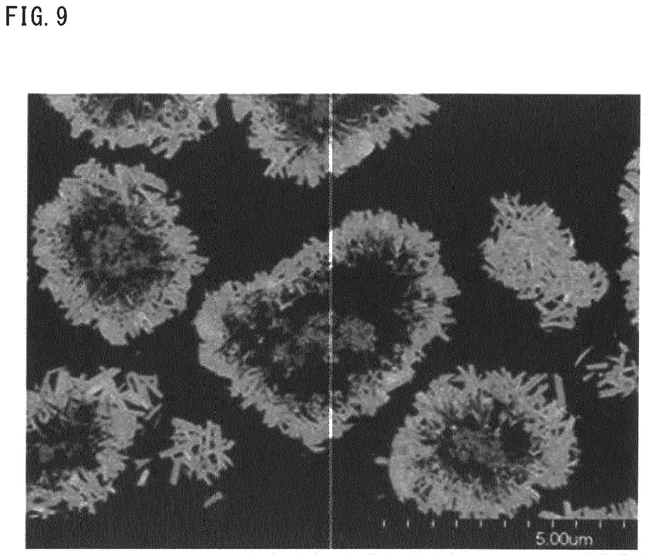

The particle structure of the secondary particles 2 is not particularly limited. The secondary particles 2 can have conventionally known particle structures such as a solid structure in which voids are hardly observed inside the particles, a hollow structure having a hollow part at the center inside the particles, a void structure having a plurality of voids inside the particles, and a multilayer structure having layered voids inside the particles. Incidentally, this particle structure of the secondary particles 2 (metal composite hydroxide 10) is passed down to the particle structure of secondary particles 22 of the lithium-metal composite oxide 20 to be described later. For example, when the secondary particles 2 have a hollow structure (see Fig. 9), the secondary particles 22 of the lithium-metal composite oxide 20 obtained also have a hollow structure, the contact area with the electrolyte solution increases, and the output characteristics are further improved together with the effect by the tungsten-concentrated layer 3 described above. Hence, it is preferable that the secondary particles 2 have a hollow structure from the viewpoint of further improving the output characteristics.

### (Tap density)

The tap density of the metal composite hydroxide 10 is not particularly limited. For example, when the secondary particles 2 have a hollow structure, the tap density is preferably 1.2 g/cm³ or more and 1.9 g/cm³ or less and more preferably 1.3 g/cm³ or more and 1.7 g/cm³ or less. The tap density of the metal composite hydroxide 10 correlates with the tap density of the lithium-metal composite oxide 20 (positive electrode active material) formed using this metal composite hydroxide 10 as a precursor. For this reason, the tap density of the lithium-metal composite oxide 20 (see Fig. 5) formed using this metal composite hydroxide 10 as a precursor can also be controlled to the above range by controlling the tap density of the metal composite hydroxide 10 to the above range. A secondary battery having a high battery capacity can be obtained when this lithium-metal composite oxide 20 is used in the positive electrode. On the other hand, when the tap density of the metal composite hydroxide 10 is less than 1.2 g/cm³, the heaped height of the metal composite hydroxide 10 increases when being heaped in a mortar, firing is not sufficiently performed, and the crystallinity may decrease in the firing process (step S40, see Fig. 6) when the positive electrode active material is produced.

### (Composition)

The metal composite hydroxide 10 contains Ni, Mn, and W, and optionally Co and M and the ratio (A) of the number of atoms of the respective metal elements is Ni : Mn : Co : W : M = x : y : z : a : b (x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta).

Incidentally, the ratio (A) of the number of atoms of the respective metal elements in the metal composite hydroxide 10 is maintained in the lithium-metal composite oxide 20 as well, and thus the preferable range of the composition of nickel, manganese, cobalt, tungsten, and element M which constitute the metal composite hydroxide 10 represented by the ratio (A) of elements and the significance thereof are the same as those in the positive electrode active material represented by the ratio (B) to be described later. For this reason, description of these matters is omitted here.

Moreover, the metal composite hydroxide 10 may be represented by Formula (A1): NiₓMn_{y}Co_{z}WₐM_{b}(OH)_{2+α} (x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, 0 ≤ α ≤ 0.5, and M is one or more elements selected from Mg, Ca, Al, Ti, V, Cr, Zr, Nb, Mo, Hf, and Ta).

It is preferable that the composition in Formula (A1) is set to Formula (A2): NiₓMn_{y}Co_{z}WₐM_{b}(OH)_{2+α} (x + y + z = 1, 0.7 < x ≤ 0.95, 0.05 ≤ y ≤ 0.1, 0 ≤ z ≤ 0.2, 0 < a ≤ 0.1, 0 ≤ b ≤ 0.1, 0 ≤ α ≤ 0.5, and M is one or more elements selected from Mg, Ca, Al, Ti, V, Cr, Zr, Nb, and Mo) from the viewpoint of further ameliorating the capacity characteristics of the secondary battery fabricated using the positive electrode active material obtained. Furthermore, the value of x in Formula (A2) is more preferably set to 0.7 < x ≤ 0.9 and still more preferably set to 0.7 < x ≤ 0.85 from the viewpoint of achieving both thermal stability and battery capacity.

It is preferable that the composition in Formula (A1) is set to Formula (A3): NiₓMn_{y}Co_{z}WₐM_{b}(OH)_{2+α} (x + y + z = 1, 0.3 ≤ x ≤ 0.7, 0.1 ≤ y ≤ 0.55, 0 ≤ z ≤ 0.4, 0 < a ≤ 0.1, 0 ≤ b ≤ 0.1, 0 ≤ α ≤ 0.5, and M is one or more elements selected from Al, Ti, V, Cr, Zr, Nb, Mo, Hf, and Ta) from the viewpoint of further ameliorating the thermal stability of the secondary battery fabricated using the positive electrode active material obtained.

### 2. Method for producing metal composite hydroxide

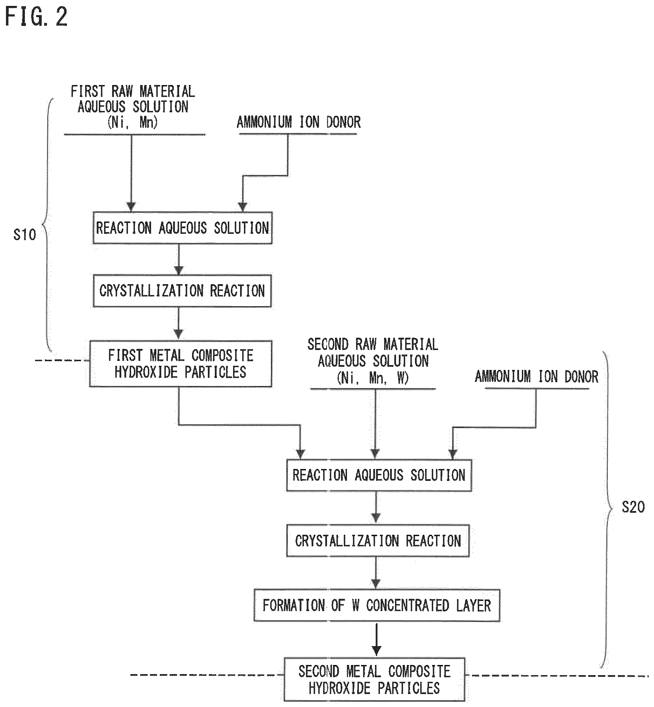

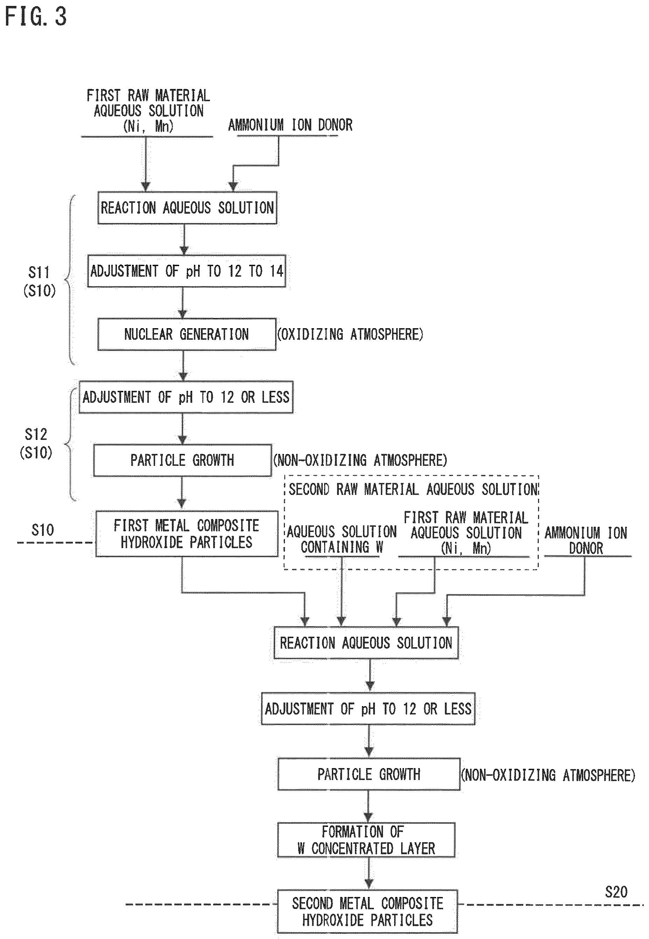

Figs. 2 and 3 are diagrams illustrating an example of a method for producing a metal composite hydroxide according to the present embodiment. The production method according to the present embodiment is a method for producing a metal composite hydroxide that contains nickel, manganese, and tungsten and optionally cobalt and element M and has a ratio of the number of atoms of the respective metal elements represented by Ni : Mn : Co : W : M = x : y : z : a : b (x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta) by a crystallization reaction. By the production method according to the present embodiment, the metal composite hydroxide 10 having the above characteristics can be easily produced on an industrial scale.

### [Crystallization reaction]

As illustrated in Fig. 2, the method for producing the metal composite hydroxide 10 includes a first crystallization process (step S10) of obtaining first metal composite hydroxide particles by supplying a first raw material aqueous solution containing, for example, nickel (Ni) and manganese (Mn) and optionally cobalt (Co) and/or metal element (M) and an ammonium ion donor to a reaction tank and performing a crystallization reaction and a second crystallization process (step S20) of forming a tungsten-concentrated layer on the surface of the first metal composite hydroxide particles and obtaining second metal composite hydroxide particles by supplying a second raw material aqueous solution containing a higher amount of tungsten than the first raw material aqueous solution and an ammonium ion donor to a reaction aqueous solution containing the first metal composite hydroxide particles and performing a crystallization reaction.

In the method for producing the metal composite hydroxide 10, the second metal composite hydroxide particles can be obtained in the second crystallization process (step S20) by forming the tungsten-concentrated layer 3 on the surface of the first composite hydroxide particles obtained by the first crystallization process (step S10). The inside of the second metal composite hydroxide particles is composed of the first metal composite hydroxide particles which do not contain tungsten or has a low tungsten content. Hence, in the lithium-metal composite oxide 20 (positive electrode active material) obtained using this as a precursor, the crystallinity inside the particles is high and the compound 23 which contains tungsten and lithium and is derived from the tungsten-concentrated layer 3 is present on the surface of the primary particles or at the grain boundary between the primary particles. Moreover, the secondary battery fabricated using this lithium-metal composite oxide 20 as a positive electrode exhibits excellent output characteristics.

The first crystallization process (step S10) further includes a nuclear generation process (step S11) of mainly performing nuclear generation and a particle growth process (step S12) of mainly performing particle growth as illustrated in Fig. 3. The nuclear generation process (step S11) and the particle growth process (step S12) can be clearly separated from each other, for example, by controlling the pH of the reaction aqueous solution, and the metal composite hydroxide 10 having narrow particle size distribution and a uniform particle size can be obtained. Incidentally, the second crystallization process (step S20) is a process of mainly performing particle growth following the particle growth process (step S12) in the first crystallization process (step S10).

Incidentally, a method for producing nickel composite hydroxide (metal composite hydroxide) including such a two-stage crystallization process is disclosed in, for example, Patent Literatures 2 to 3, Patent Literature 10, and the like, and the detailed conditions can be appropriately adjusted with reference to these literatures. Moreover, the method for producing a metal composite hydroxide according to the present embodiment can be easily applied to industrial scale production since the tungsten-concentrated layer 3 having a desired film thickness can be formed under the conditions of a known crystallization method as to be described later.

Hereinafter, the respective processes in the production method including the nuclear generation process (step S11) and the particle growth process (step S12) will be described with reference to Fig. 3. It should be noted that the following description is an example of the method for producing the metal composite hydroxide 10 and the method is not limited to this method.

### (1) First crystallization process (step S10)

### (Nuclear generation process)

First, the first raw material aqueous solution and the ammonium ion donor are supplied, the pH of the reaction aqueous solution (aqueous solution for nuclear generation) in the reaction tank is controlled in a predetermined range, nuclear generation is performed (step S11). The first raw material aqueous solution is prepared by, for example, dissolving a compound containing a transition metal to be a raw material in water. Incidentally, in the method for producing a metal composite hydroxide to be described below, the composition ratio in the metal composite hydroxide formed by crystallization in each process is the same as the composition ratio of the respective metals in the raw material aqueous solution, and thus the composition ratio of the respective metals in each raw material aqueous solution can be adopted as the composition ratio of the respective metals in the intended metal composite hydroxide. Moreover, the first raw material aqueous solution may contain tungsten in a small amount or may not contain tungsten.

First, an alkaline aqueous solution and an aqueous solution containing an ammonium ion donor are supplied into and mixed together in a reaction tank to prepare a pre-reaction aqueous solution having a pH value of 12.0 or more and 14.0 or less at a liquid temperature of 25°C and an ammonium ion concentration of 3 g/L or more and 25 g/L or less. The reaction atmosphere in the reaction tank is not particularly limited. The reaction atmosphere is preferably set to an oxidizing atmosphere, for example, in the case of obtaining a metal composite hydroxide having a hollow structure. The oxidizing atmosphere preferably has an oxygen concentration of more than 1 vol%, the oxygen concentration may be more than 10 vol% or 20 vol% or more, and the reaction atmosphere may be set to the atmosphere. The atmosphere is adjusted by introducing, for example, nitrogen gas or oxygen gas. Incidentally, the pH value of the pre-reaction aqueous solution can be measured using a pH meter and the ammonium ion concentration can be measured using an ion meter.

Subsequently, a reaction aqueous solution (aqueous solution for nuclear generation) is formed by supplying the first raw material aqueous solution into the reaction tank while stirring the pre-reaction aqueous solution in the reaction tank. Incidentally, in the nuclear generation process (step S11), the pH value of and the concentration of ammonium ions in the aqueous solution for nuclear generation change as the nuclear generation proceeds in the reaction aqueous solution, and it is thus preferable to control so that the pH value of the liquid in the reaction tank is maintained in the range of pH 12.0 or more and 14.0 or less at a liquid temperature of 25°C and the concentration of ammonium ions is maintained in the range of 3 g/L or more and 25 g/L or less by supplying an alkaline aqueous solution and an ammonia aqueous solution in a timely manner. When the pH value of the reaction aqueous solution (aqueous solution for nuclear generation) is in the above range, the nucleus hardly grows but nuclear generation preferentially occurs.

The pH value of the reaction aqueous solution (aqueous solution for nuclear generation) measured at a liquid temperature of 25°C is in a range of preferably 12.0 or more and 14.0 or less, more preferably 12.3 or more and 13.5 or less, and still more preferably 12.5 or more and 13.3 or less. When the pH is in the above range, it is possible to suppress the growth of nucleus, to preferentially perform nuclear generation, to generate homogeneous nuclei having narrow particle size distribution in the nuclear generation process. On the other hand, when the pH value is less than 12.0, the growth of nuclei (particles) proceeds together with nuclear generation, thus the particle sizes of the metal composite hydroxide particles obtained are non-uniform, and the particle size distribution may deteriorate. Moreover, when the pH value exceeds 14.0, the produced nucleus may be too fine and the reaction aqueous solution (aqueous solution for nuclear generation) may gel.

Incidentally, the fluctuation range of the pH value in the reaction aqueous solution (aqueous solution for nuclear generation) is preferably set to be within ± 0.2. When the fluctuation range of the pH value is large, the amount of nuclei generated and the proportion of particle growth are not constant and it is difficult to obtain metal composite hydroxide particles having narrow particle size distribution.

The ammonium ion concentration in the reaction aqueous solution (aqueous solution for nuclear generation) is preferably adjusted to be within a range of 3 g/L or more and 25 g/L or less and more preferably 5 g/L to 20 g/L or less. Ammonium ions function as a complexing agent in the reaction aqueous solution, and it is thus difficult to obtain metal composite hydroxide particles having well-ordered shape and particle size when the ammonium ion concentration is less than 3 g/L since the solubility of metal ions cannot be kept constant or the reaction aqueous solution easily gels. On the other hand, when the ammonium ion concentration exceeds 25 g/L, the solubility of metal ions is too high, thus the amount of metal ions remaining in the reaction aqueous solution increases, and this may cause deviation of composition and the like.

Incidentally, when the ammonium ion concentration fluctuates during the crystallization reaction, the solubility of metal ions fluctuates and uniform metal composite hydroxide particles are not formed. For this reason, it is preferable to control the fluctuation range of ammonium ion concentration in a certain range throughout the nuclear generation process (step S11) and the particle growth process (step S12). Specifically, the fluctuation range is preferably controlled to a fluctuation range of ± 5 g/L.

In the nuclear generation process (step S11), a new nucleus is continuously generated as the first raw material aqueous solution, an alkaline aqueous solution, and an aqueous solution containing an ammonium ion donor are supplied to the reaction aqueous solution (aqueous solution for nuclear generation). Thereafter, the nuclear generation process is terminated at a time point at which a predetermined amount of nuclei is generated in the aqueous solution for nuclear generation. At this time, the amount of nuclei generated can be determined from the amount of the metal compound contained in the raw material aqueous solution supplied to the aqueous solution for nuclear generation.

The amount of nuclei generated in the nuclear generation process (step S11) is not particularly limited but is preferably 0.1 at% or more and 2 at% or less and more preferably 0.1 at% or more and 1.5 at% or less with respect to the metal element in the metal compound contained in the raw material aqueous solution supplied throughout the crystallization process (including the first crystallization process and the second crystallization process) from the viewpoint of obtaining metal composite hydroxide particles having narrow particle size distribution.

Moreover, in the nuclear generation process, the upper limit of the temperature of the reaction aqueous solution (aqueous solution for nuclear generation) is not particularly limited but is, for example, preferably 60°C or less and more preferably 50°C or less. This is because it is concerned that the primary crystals are distorted and the tap density begins to decrease if the temperature of the reaction aqueous solution (aqueous solution for nuclear generation) exceeds 60°C. Incidentally, the lower limit of the temperature of the reaction aqueous solution (aqueous solution for nuclear generation) is, for example, 20°C or more.

The reaction atmosphere in the nuclear generation process (step S11) is not particularly limited but is preferably controlled to an oxidizing atmosphere having an oxygen concentration of more than 1 vol%, may be an atmosphere having an oxygen concentration of more than 10 vol% or 20 vol% or more, or may be set to the atmosphere, for example, in the case of obtaining a metal composite hydroxide having a tap density is 1.20 g/cm³ or more and a hollow structure.

### (Particle growth process)

Subsequently, particle growth is performed in the reaction aqueous solution (aqueous solution for particle growth) of which the pH is adjusted to a specific range (step S12). The reaction aqueous solution (aqueous solution for particle growth) is formed by supplying the first raw material aqueous solution, an alkaline aqueous solution, and an aqueous solution containing an ammonium ion donor to the reaction aqueous solution containing the nuclei generated. The reaction aqueous solution (aqueous solution for particle growth) is preferably adjusted to have a pH value of 10.5 or more and 12.0 or less and an ammonium ion concentration of 3 g/L or more and 25 g/L or less at a liquid temperature of 25°C. By this, not nuclear generation but particle growth is dominantly performed in the reaction aqueous solution (aqueous solution for particle growth).

The reaction atmosphere in the reaction tank is preferably set to a non-oxidizing atmosphere and is preferably set to an atmosphere (non-oxidizing atmosphere) having an oxygen concentration of 1 vol% or less. When the oxygen concentration in the reaction atmosphere in the reaction tank is 1 vol% or less, it is possible to grow the nuclei generated in the nuclear generation process (step S11) to a certain range while suppressing unnecessary oxidation and thus to further improve the crystallinity of the positive electrode active material obtained. The atmosphere is adjusted by introducing, for example, nitrogen gas. Incidentally, switching from the oxidizing atmosphere to the non-oxidizing atmosphere may be performed at the start point of the particle growth process (step S12) or in the middle of the particle growth process (step S12).

Specifically, after termination of the nuclear generation process, the pH value of the aqueous solution for nuclear generation in the reaction tank is adjusted to 10.5 or more and 12.0 or less at a liquid temperature of 25°C, and an aqueous solution for particle growth, which is a reaction aqueous solution in the particle growth process (step S12), is formed. The pH value can be adjusted by stopping the supply of only the alkaline aqueous solution, but it is preferable to temporarily stop the supply of all the aqueous solutions and thus to adjust the pH value from the viewpoint of enhancing the uniformity of particle size. Moreover, the pH value may be adjusted by supplying the same kind of inorganic acid as the acid constituting the compound containing a transition metal to be a raw material, for example, sulfuric acid in the case of using a sulfate of a transition metal as a raw material to the reaction aqueous solution (aqueous solution for nuclear generation).

Next, supply of the first raw material aqueous solution is restarted while stirring the reaction aqueous solution (aqueous solution for particle growth). At this time, the pH value of the aqueous solution for particle growth is in the above-described range, thus new nuclei are hardly generated, but nucleus (particle) growth proceeds, and first metal composite hydroxide particles having a predetermined particle size can be formed. Incidentally, in the particle growth process (step S12) as well, the pH value of and the ammonium ion concentration in the aqueous solution for particle growth change as the particle growth proceeds, and it is thus necessary to maintain the pH value and ammonium ion concentration in the above ranges by supplying an alkaline aqueous solution and an ammonia aqueous solution in a timely manner.

The pH value of the reaction aqueous solution (particle growth aqueous solution) is controlled in a range of 10.5 or more and 12.0 or less, preferably 11.0 or more and 12.0 or less, and more preferably 11.5 or more and 11.9 or less at a liquid temperature of 25°C. When the pH is in the above range, it is possible to suppress the generation of new nuclei, to preferentially perform particle growth, to obtain a homogeneous metal composite hydroxide having narrow particle size distribution. On the other hand, when the pH value is less than 10.5, the ammonium ion concentration increases and the solubility of metal ions increases, thus not only the rate of crystallization reaction slows down but also the amount of metal ions remaining in the reaction aqueous solution increases and the productivity may deteriorate. Moreover, when the pH value exceeds 12.0, the amount of nuclei generated during the particle growth process increases, the particle sizes of the metal composite hydroxide particles obtained are non-uniform, and the particle size distribution may deteriorate.

Incidentally, the fluctuation range of the pH value in the reaction aqueous solution (particle growth aqueous solution) is preferably set to be within ± 0.2. When the fluctuation range of the pH value is large, the amount of nuclei generated and the proportion of particle growth are not constant and it is difficult to obtain a metal composite hydroxide having narrow particle size distribution.

Moreover, the pH value in the particle growth process (step S12) is preferably adjusted to a value lower than the pH value in the nuclear generation process (step S11), and the pH value in the particle growth process (step S12) is set to be lower than the pH value in the nuclear generation process (step S11) by preferably 0.5 or more and more preferably 0.8 or more in order to clearly separate nuclear generation and particle growth from each other.

For example, when the pH value of the reaction aqueous solution (nuclear generation process and/or particle growth process) is 12.0, the pH value is a boundary condition between nuclear generation and particle growth and thus the condition can be the condition for either of the nuclear generation process or the particle growth process depending on the presence or absence of nucleus in the reaction aqueous solution. In other words, when the pH value in the nuclear generation process is set to be higher than 12.0, a large amount of nuclei are generated, and then the pH value in the particle growth process is set to 12.0, a large amount of nuclei are present in the reaction aqueous solution, thus particle growth preferentially occurs, and metal composite hydroxide particles having narrow particle size distribution can be obtained. On the other hand, when the pH value in the nuclear generation process is set to 12.0, there is no nucleus that grows in the reaction aqueous solution, thus nuclear generation preferentially occurs, and the generated nuclei grow and favorable metal composite hydroxide particles can be obtained by setting the pH value in the particle growth process to be lower than 12.0.

The ammonium ion concentration in the reaction aqueous solution (aqueous solution for particle growth) can be set to be the same as the preferable range of the ammonium ion concentration in the reaction aqueous solution (aqueous solution for nuclear generation). Moreover, the fluctuation range of the ammonium ion concentration can also be set to be the same as the preferable range in the reaction aqueous solution (aqueous solution for nuclear generation).

### (2) Second crystallization process

Subsequently, a second raw material aqueous solution containing a metal element and a higher amount of tungsten than the first raw material aqueous solution and an ammonium ion donor are supplied to the reaction aqueous solution containing the first metal composite hydroxide particles, and a crystallization reaction is performed (step S20). By this, second metal composite hydroxide particles are obtained in which a tungsten-concentrated layer is formed on the surface of the first metal composite hydroxide particles.

Particles grow using secondary particles formed by aggregation of a plurality of primary particles as a nucleus, thus the second raw material aqueous solution containing a higher amount of tungsten than the first raw material aqueous solution and the ammonium ion donor can be supplied to the reaction aqueous solution containing the first metal composite hydroxide particles in succession to the particle growth process (step S12) and the second crystallization process can be performed (step S20) in the second crystallization process. By this, a tungsten-concentrated layer is formed on the outer periphery section of the secondary particles constituting the first composite oxide particles.

In the method for producing a metal composite hydroxide of the present embodiment, the thickness of the tungsten-concentrated layer formed on the outer periphery of the first metal composite hydroxide particles can be easily controlled, for example, by adjusting the timing (namely, the timing to start the second crystallization process) to start addition of the second raw material aqueous solution.

The second crystallization reaction (step S20) can be started by supplying the second raw material aqueous solution at the time point at which the metal element in the first raw material aqueous solution is supplied into the reaction tank at, for example, 10 mass% or more with respect to the total amount of metal added in the first crystallization process and second crystallization process. By this, a tungsten-concentrated layer can be easily formed on the surface of the first metal composite hydroxide particles.

In addition, from the viewpoint of obtaining a positive electrode active material which exhibits higher crystallinity and further decrease the reaction resistance when being used in the positive electrode of a secondary battery, the second crystallization process (step S20) can be started by supplying the second raw material aqueous solution at the time point at which the metal element in the first raw material aqueous solution is supplied into the reaction tank preferably in a range of 50 mass% or more and 95 mass% or less and more preferably in a range of 75 mass% or more and 90 mass% or less with respect to the total amount of metal added in the first crystallization process and second crystallization process.

The second crystallization process (step S20) is a process in which particle growth is performed in the same manner as the particle growth process (step S12), and thus the pH, temperature, ammonium ion concentration in the reaction aqueous solution, the reaction atmosphere in the reaction tank, and the like can be set to the same conditions as those in the particle growth process (step S12). By continuously performing the second crystallization process (step S20) under the same conditions as those in the particle growth process (step S12), a tungsten-concentrated layer can be formed on the surface of the first metal composite hydroxide particles simply and with high productivity.

Moreover, the supply of the second raw material aqueous solution may be performed by separately preparing a raw material aqueous solution containing a metal element other than tungsten and an aqueous solution containing tungsten and supplying each of these into the reaction tank. A tungsten-concentrated layer can be formed more easily and uniformly by separately supplying the aqueous solution containing tungsten. Moreover, as illustrated in Fig. 3, the second raw material aqueous solution may contain the first raw material aqueous solution and an aqueous solution containing tungsten (W) and the respective aqueous solutions may be separately supplied to reaction aqueous solution. By this, it is possible to uniformly form the tungsten-concentrated layer and to easily adjust the thickness of the tungsten-concentrated layer by changing the concentration of the aqueous solution containing tungsten and the flow velocity when the aqueous solution containing tungsten is supplied into the reaction tank.

The aqueous solution containing tungsten can be prepared by, for example, dissolving a tungsten compound in water. The tungsten compound used is not particularly limited, and a compound which contains tungsten but does not contain lithium can be used, but sodium tungstate can be preferably used.

The tungsten (W) concentration in the aqueous solution containing tungsten is not particularly limited but may be, for example, 0.1 mol/L or more, preferably 0.1 mol/L or more and 0.5 mol/L or less, and preferably 0.2 mol/L or more. 0.4 mol/L or less. In addition, the flow rate of the aqueous solution containing tungsten added is not particularly limited but is, for example, 5 L/min or more and 20 L/min or less and preferably 10 L/min or more and 15 L/min or less.

The thickness of the tungsten-concentrated layer can also be controlled by adjusting the concentration of the aqueous solution containing tungsten or the flow rate of the aqueous solution added. For example, when the concentration and added flow rate of the aqueous solution containing tungsten are constant, the thickness and concentration of the tungsten-concentrated layer to be formed can be adjusted more accurately and easily by adjusting the time point at which addition of the aqueous solution containing tungsten starts.

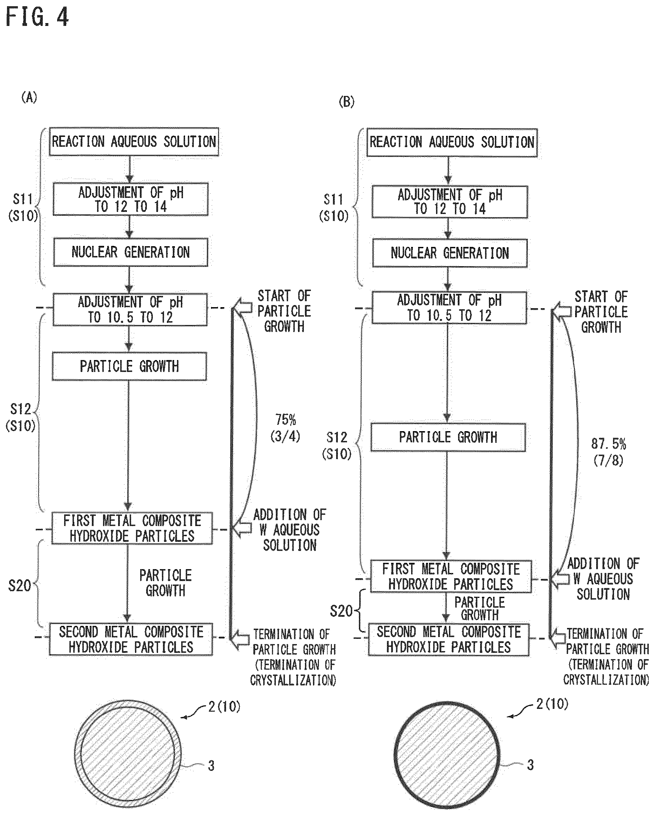

Figs. 4(A) and 4(B) are diagrams illustrating a suitable example of the production method of the present embodiment. Hereinafter, the start point of the addition of the aqueous solution containing tungsten (the start point of the second crystallization process) when the first crystallization process (step S10) separately includes the nuclear generation process (step S11), and the particle growth process (step S12) and the second crystallization process (step S20) is performed by supplying an aqueous solution containing tungsten together with the first raw material aqueous solution in succession to the particle growth process (step S12) will be described with reference to Figs. 4(A) and 4(B).

Fig. 4(A) is a diagram illustrating an example of a case in which the aqueous solution containing tungsten is added from the time point at which 75% of the entire time, during which particle growth is performed, from the start point of particle growth to the end point of particle growth (end point of crystallization process) elapses. In this case, the tungsten-concentrated layer 3 can be formed on the surface layer (outer periphery) of the secondary particles (first metal composite hydroxide particles) as illustrated in the lower part of Fig. 4(A). Incidentally, the tungsten-concentrated layer 3 is not formed when the aqueous solution containing tungsten is added in the entire process from the start point to the end point of particle growth.

Fig. 4(B) is a diagram illustrating an example of a case in which the aqueous solution containing tungsten is added from the time point at which 87.5% of the entire time, during which particle growth is performed, from the start point of particle growth to the end point of particle growth (end point of crystallization process) elapses. When the amount of tungsten added is the same, the tungsten-concentrated layer 3 in which tungsten is more concentrated than when the addition is started from the time point at which 75% of the entire time elapses can be formed on the surface layer (outer periphery) of the secondary particles (first metal composite hydroxide particles) as illustrated in the lower part of Fig. 4(B).

When the second crystallization process (step S20) is performed by supplying an aqueous solution containing tungsten together with the first raw material aqueous solution as described above, the supply of the aqueous solution containing tungsten (second raw material aqueous solution) can be performed at the time point at which, for example, 10% or more, preferably 50% or more and 95% or less, more preferably 75% or more and 90% or less of the entire time from the start to the end of particle growth in the first and second crystallization processes elapses. The tungsten-concentrated layer can be easily obtained with favorable productivity when the start time of supply is in the above range. Moreover, there is a tendency that the crystallite diameter of the positive electrode active material obtained can be increased when the time point at which the addition of the aqueous solution containing tungsten is started later within the above range. Incidentally, the addition of the aqueous solution containing tungsten is continuously performed until the crystallization reaction is terminated.

Hereinafter, the respective raw materials and conditions preferably used in the crystallization process will be described.

### (First and second raw material aqueous solutions)

The first raw material aqueous solution and second raw material aqueous solution contain nickel and manganese and optionally cobalt, element M, and tungsten. Moreover, the first raw material aqueous solution may or may not contain tungsten. In the second crystallization process, the ratio of the metal elements in the first raw material aqueous solution is the composition ratio (excluding tungsten) of the metal composite hydroxide finally obtained in the case of using the first raw material aqueous solution and an aqueous solution containing tungsten as the second raw material aqueous solution. For this reason, in the first raw material aqueous solution, the content of each metal element can be appropriately adjusted according to the intended composition of metal composite hydroxide. For example, in the case of attempting to obtain metal composite hydroxide particles represented by the ratio (A) described above, the ratio of metal elements in the first and second raw material aqueous solutions can be adjusted to be Ni : Mn : Co : M = x : y : z : b (where x + y + z = 1, 0.3 ≤ x ≤ 0.95, 0.05 ≤ y ≤ 0.55, 0 ≤ z ≤ 0.4, and 0 ≤ b ≤ 0.1). Incidentally, the first raw material aqueous solution contains at least one among the elements presented in the ratio (A) described above. Moreover, the compositions of the respective metal elements in the first raw material aqueous solution and second raw material aqueous solution used in the first crystallization process and second crystallization process may be different from each other. In this case, it is only required that the sum of contents of the respective metal elements in the first and second raw material aqueous solutions used in the respective crystallization processes is the composition ratio in the metal composite hydroxide obtained.

The compounds of metal elements (transition metals) used in the preparation of the first raw material aqueous solution and second raw material aqueous solution are not particularly limited, but it is preferable to use water-soluble nitrates, sulfates, and hydrochlorides from the viewpoint of ease of handling, and it is particularly preferable to suitably use sulfates from the viewpoint of cost and of preventing halogen contamination.

Moreover, in the case of containing element M (M is one or more elements selected from Mg, Ca, Al, Ti, V, Cr, Zr, Nb, Mo, Hf, and Ta) in the metal composite hydroxide, a water-soluble compound is preferable as a compound for supplying element M in the same manner, and for example, magnesium sulfate, calcium sulfate, aluminum sulfate, titanium sulfate, ammonium peroxotitanate, potassium titanium oxalate, vanadium sulfate, ammonium vanadate, chromium sulfate, potassium chromate, zirconium sulfate, niobium oxalate, ammonium molybdate, hafnium sulfate, and sodium tantalate can be suitably used. Moreover, the tungsten compound used in the preparation of the second raw material solution is not particularly limited but, for example, sodium tungstate and ammonium tungstate can be used, and sodium tungstate is preferable.

The concentrations of the first raw material aqueous solution and second raw material aqueous solution are set to preferably 1 mol/L or more and 2.6 mol/L or less and more preferably 1.5 mol/L or more and 2.2 mol/L or less as the sum of metal compounds. When the concentration of the raw material aqueous solution is less than 1 mol/L, the amount of crystallized substance per reaction tank decreases and thus the productivity decreases. On the other hand, when the concentration of the mixed aqueous solution exceeds 2.6 mol/L, the concentration exceeds the saturated concentration at room temperature and it is thus concerned that crystals of each metal compound are reprecipitated to clog the pipe and the like.

Incidentally, the above-described metal compound may not be necessarily supplied to the reaction tank as one kind of raw material aqueous solution. For example, in the case of performing the crystallization reaction using a metal compound which reacts when being mixed to produce a compound other than the intended compound, the aqueous solutions of metal compounds may be individually prepared so that the total concentration of all the aqueous solutions of metal compounds is in the above range and supplied into the reaction tank as individual aqueous solutions of metal compounds at predetermined proportions.

Moreover, the amounts of the first raw material aqueous solution and second raw material aqueous solution supplied are set so that the concentration of the product (second metal composite hydroxide particles) in the reaction solution (particle growth aqueous solution) is preferably 30 g/L or more and 200 g/L or less and more preferably 80 g/L or more and 150 g/L or less at the end point of the crystallization process. When the concentration of the product is less than 30 g/L, the primary particles may not be sufficiently aggregated. On the other hand, when the concentration of the product exceeds 200 g/L, the aqueous solution for nuclear generation or the aqueous solution for particle growth may not sufficiently diffuse in the reaction tank, and the particle growth may be biased.

### (Alkaline aqueous solution)

The alkaline aqueous solution for adjusting the pH value in the reaction aqueous solution is not particularly limited, but general aqueous solutions of alkali metal hydroxides such as sodium hydroxide and potassium hydroxide can be used. Incidentally, the alkali metal hydroxide can be directly added to the reaction aqueous solution but is preferably added as an aqueous solution from the viewpoint of ease of pH control. In this case, the concentration of the alkali metal hydroxide aqueous solution is preferably 20 mass% or more and 50 mass% or less and more preferably 20 mass% or more and 30 mass% or less. By regulating the concentration of the alkali metal aqueous solution to such a range, it is possible to prevent the pH value from locally increasing at the added location while suppressing the amount of solvent (water amount) supplied to the reaction system and thus to efficiently obtain metal composite hydroxide particles having narrow particle size distribution.

Incidentally, the method for supplying the alkaline aqueous solution is not particularly limited as long as the pH value of the reaction aqueous solution does not locally increase and is maintained in a predetermined range. For example, the reaction aqueous solution may be supplied by a pump capable of controlling the flow rate such as a metering pump while being sufficiently stirred.

### (Aqueous solution containing ammonium ion donor)

The aqueous solution containing an ammonium ion donor is not particularly limited and, for example, ammonia water or an aqueous solution of ammonium sulfate, ammonium chloride, ammonium carbonate, or ammonium fluoride can be used.

In the case of using ammonia water as the ammonium ion donor, the concentration thereof is preferably 20 mass% or more and 30 mass% or less and more preferably 22 mass% or more and 28 mass% or less. By regulating the concentration of ammonia water to such a range, it is possible to suppress loss of ammonia due to volatilization and the like to the minimum and thus to improve the production efficiency. Incidentally, as the method for supplying the aqueous solution containing an ammonium ion donor as well, the aqueous solution can be supplied by a pump capable of controlling the flow rate in the same manner as the alkaline aqueous solution.

### (Reaction atmosphere)

The reaction atmosphere is not particularly limited but it is preferable that the reaction atmosphere in the nuclear generation process (step S11) is set to an oxidizing atmosphere having an oxygen concentration of more than 1 vol% and the reaction atmosphere in the particle growth process (step S12) is set to a non-oxidizing atmosphere having an oxygen concentration of 1 vol% or less as described above, for example, in the case of obtaining a metal composite hydroxide having a tap density is 1.20 g/cm³ or more and a hollow structure. In the case of setting the reaction atmosphere in the reaction tank to the above range, a metal composite hydroxide having a high tap density and a hollow structure can be easily obtained. Incidentally, switching of the atmosphere may be performed at the start point of the particle growth process (step S12) or the atmosphere may be switched to the non-oxidizing atmosphere in the middle of the particle growth process (step S12).

### (Reaction temperature)

The temperature (reaction temperature) of the reaction aqueous solution is controlled to be in a range of preferably 20°C or more and more preferably 20°C or more and 60°C or less throughout the crystallization process (nuclear generation process and particle growth process, second crystallization process). When the reaction temperature is less than 20°C, nuclear generation is likely to occur as the solubility of reaction aqueous solution decreases and it may be difficult to control the average particle size and particle size distribution of the metal composite hydroxide obtained. Incidentally, the upper limit of the reaction temperature is not particularly limited, but volatilization of ammonia is promoted when the reaction temperature exceeds 60°C, the amount of the aqueous solution which contains an ammonium ion donor and is supplied in order to control the ammonium ions in the reaction aqueous solution in a certain range increases, and the production cost increases. Furthermore, when the reaction temperature exceeds 60°C, it is concerned that the primary crystals are distorted and the tap density begins to decrease in the nuclear generation process as described above.

### (Production apparatus)

In the method for producing a metal composite hydroxide according to the present embodiment, it is preferable to use an apparatus in which the product is not recovered until the reaction is completed, for example, a batch reaction tank. In the case of such an apparatus, the growing particles are not recovered at the same time as the overflow liquid unlike the continuous crystallizer in which the product is recovered by the overflow manner, and thus metal composite hydroxide particles having narrow particle size distribution can be easily obtained.

Moreover, in the method for producing a metal composite hydroxide of the present embodiment, it is preferable to control the reaction atmosphere during the crystallization reaction and thus to use an apparatus capable of controlling the atmosphere such as a hermetically sealed apparatus. In the case of such an apparatus, it is possible to properly control the reaction atmosphere in the nuclear generation process (step S11) and the particle growth process (step S12) and thus to easily obtain metal composite hydroxide particles having the above-described particle structure and narrow particle size distribution.

### 3. Positive electrode active material for non-aqueous electrolyte secondary battery

The positive electrode active material according to the present embodiment contains a lithium-metal composite oxide (hereinafter referred to as "lithium-metal composite oxide") which contains lithium, nickel, manganese, and tungsten and optionally cobalt and element M and has a ratio of the number of atoms of the respective metal elements represented by Li : Ni : Mn : Co : W : M = 1 + u : x : y : z : a : b (x + y + z = 1, -0.05 ≤ u ≤ 0.50, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta). Moreover, the lithium-metal composite oxide has a hexagonal layered crystal structure.

Fig. 5(A) to Fig. 5(D) are schematic diagrams illustrating an example of the lithium-metal composite oxide according to the present embodiment. As illustrated in Fig. 5(A), the lithium-metal composite oxide 20 includes secondary particles 22 formed by aggregation of a plurality of primary particles 21. Incidentally, the lithium-metal composite oxide 20 may include single primary particles 21 in a small amount. Hereinafter, details of the lithium-metal composite oxide 20 will be described with reference to Fig. 5(A) and Fig. 5(B).

### (Compound containing tungsten and lithium)

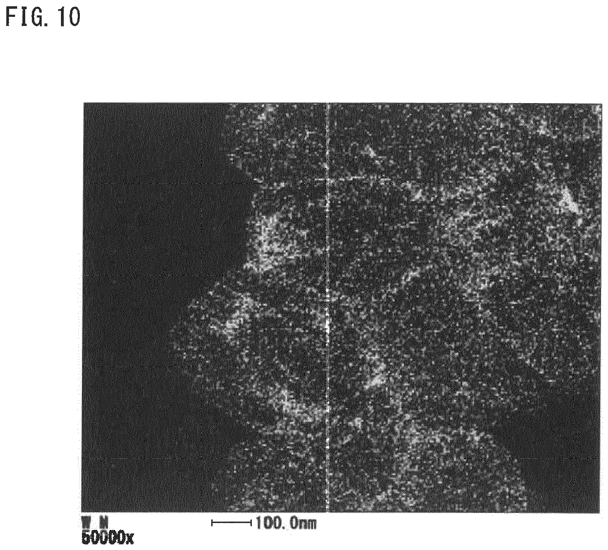

In the lithium-metal composite oxide 20, a compound 23 containing tungsten and lithium is present, in a concentrated state, on the surface layer of the primary particles 21 present on the surface of or inside the secondary particles 22 or at the grain boundary between the primary particles 21 as illustrated in Fig. 5(A). The presence site of the compound 23 containing tungsten and lithium can be confirmed by detecting the W distribution by surface analysis using an energy dispersive X-ray analyzer (EDX), for example, as illustrated in Fig. 10. Moreover, it is preferable that the compound 23 containing tungsten and lithium is present on the surface (surface layer) in a higher amount than inside the secondary particles 22.

When the surface layer of the positive electrode active material is coated with a dissimilar compound, the movement (intercalation) of lithium ions is greatly limited, as a result, a high capacity that is an advantage of the lithium-metal composite oxide may not be fully exerted. In contrast, the compound 23 containing tungsten and lithium (for example, lithium tungstate) exhibits high lithium ion conductivity and has an effect of promoting the movement of lithium ions. Hence, the reaction resistance of the positive electrode active material can be decreased and the output characteristics can be improved as a conduction path of Li is formed at the interface with the electrolyte solution by forming the compound 23 containing tungsten and lithium on the surface layer of the primary particles 21 in the vicinity of the surface of the lithium-metal composite oxide 20 and at the grain boundary between the primary particles 21. The compound 23 containing tungsten and lithium can be present, for example, in the form of fine particles in the vicinity of the surface of the lithium-metal composite oxide 20.

The compound 23 containing tungsten and lithium is not particularly limited, and examples thereof include lithium tungstates such as Li₂WO₄, Li₄WO₅, and Li₂W₂O₇. As these lithium tungstates are formed, in a concentrated state, on the surface layer of the primary particles 21 present on the surface of or inside the secondary particles 22 and at the grain boundary between the primary particles 21, the lithium ion conductivity of the lithium-metal composite oxide 20 further increases and the reaction resistance further decreases when the lithium-metal composite oxide 20 is used in the positive electrode of a secondary battery.

### (Particle structure)

The structure of the secondary particles 22 of the lithium-metal composite oxide 20 is not particularly limited, and may be, for example, a solid structure formed as the primary particles 21 are aggregated relatively without gaps, a void structure having a plurality of voids 24 inside the secondary particles 22 as illustrated in Fig. 5(A), or a hollow structure having a hollow part 25 as illustrated in Fig. 5(C). When the lithium-metal composite oxide 20 composed of secondary particles having the voids 24 and the hollow parts 25 is used as a positive electrode of a secondary battery, the electrolyte solution penetrates into the secondary particles 22 and the contact area between the primary particles 21 inside the secondary particles 22 and the electrolyte solution increases, thus the resistance inside the secondary particles 22 can be decreased and the output characteristics can be improved. In particular, the lithium-metal composite oxide 20 obtained using the metal composite hydroxide 10 having a hollow structure as a precursor exhibits excellent output characteristics since the lithium-metal composite oxide 20 inherits the hollow structure, which is a feature of the metal composite hydroxide 10, and the contact area thereof with the electrolyte solution increases.

Moreover, the secondary particles 22 may have a multilayer structure having a center of a solid structure or a hollow structure and having a space section 26 in which the primary particles 21 are not present and a shell section (outer shell section or outer shell section and inner shell section) electrically connected to the center on the outside of the center as illustrated in Fig. 5(D) (see Patent Literature 3). In such a lithium-metal composite oxide 20, the space section 26 is not required to be partially formed and may be formed entirely between the center and the inner shell section or the outer shell section. Moreover, the center may be in a state in which a plurality of aggregated sections formed by aggregation of plate-shaped primary particles are connected to each other. Incidentally, in the present specification, "electrically conductive" means that the high density sections of the lithium-metal composite oxide are directly and structurally connected to each other and in an electrically conductive state.

When the lithium-metal composite oxide 20 including the secondary particles 22 having a multilayer structure including the space section 26 as described above is used as a positive electrode, the electrolyte solution enters the inside of the secondary particles 22 through the grain boundary between the primary particles 21 or the space section 26, thus lithium can be de-inserted and inserted not only on the surface of the secondary particles 22 but also inside the secondary particles 22. Moreover, the lithium-metal composite oxide 20 has a large number of electrically conductive paths inside the secondary particles 22, and thus the resistance inside the particles can be sufficiently decreased. Hence, when the positive electrode of a secondary battery is configured using this lithium-metal composite oxide 20, the output characteristics can be greatly improved without impairing the capacity characteristics and the cycle characteristics.

Incidentally, the secondary particles having a multilayer structure including the hollow part 25 and the space section 26 can be formed by appropriately adjusting the respective conditions in the above-described nuclear generation process (step S11) and particle growth process (step S12), and, for example, the conditions described in Patent Literatures 2 and 3 can be used.

In the positive electrode active material according to the present embodiment, it is possible to obtain the metal composite hydroxide 10 in which the tungsten-concentrated layer 3 is formed on the surface layer and the lithium-metal composite oxide 20 formed using this as a precursor by adding a second crystallization process of adding an aqueous solution containing tungsten as described above in succession to the conventionally known particle growth process when producing the secondary particles 22 (metal composite hydroxide) having a multilayer structure including the hollow part 25 and the space section 26. Moreover, in the lithium-metal composite oxide 20, as the compound 23 containing lithium and tungsten is present on the surface layer of the primary particles 21 and at the grain boundary between the primary particles 21, further improvement in output characteristics can be realized while maintaining the crystallinity of the positive electrode active material including the secondary particles 22 having a multilayer structure including the hollow part 25 and the space section 26.

### (Average particle size)

The average particle size (MV) of the positive electrode active material of the present embodiment is not particularly limited but can be adjusted, for example, to be 3 µm or more and 9 µm or less. When the average particle size is in the above range, not only the battery capacity per unit volume of the secondary battery fabricated using this positive electrode active material can be increased, but also the thermal stability and output characteristics can be ameliorated. In contrast, when the average particle size is less than 4 µm, the packing property of the positive electrode active material decreases and it is difficult to increase the battery capacity per unit volume. On the other hand, when the average particle size exceeds 9 µm, the reaction area of the positive electrode active material begins to decrease and thus the output characteristics may not be sufficient.

Incidentally, the average particle size of the positive electrode active material means the volume-based average particle size (MV) and can be determined, for example, from a volume integrated value measured using a laser light diffraction scattering particle size analyzer in the same manner as that of the metal composite hydroxide described above.

### (Particle size distribution)

It is preferable that [(d90 - d10)/average particle size], which is an index indicating the spread of particle size distribution, is 0.65 or less in the positive electrode active material of the present embodiment. When [(d90 - d10)/average particle size] is in the above range, the lithium-metal composite oxide 20 having significantly narrow particle size distribution can be configured. Such a positive electrode active material has a small proportion of fine particles and coarse particles, and a secondary battery fabricated using this in the positive electrode exhibits excellent thermal stability, cycle characteristics, and output characteristics.

On the other hand, when [(d90 - d10)/average particle size] exceeds 0.65, the proportion of fine particles and coarse particles in the positive electrode active material increases. In a secondary battery fabricated using a positive electrode active material having wide spread of particle size distribution, for example, heat is generated due to local reaction of fine particles, and thermal stability decreases as well as fine particles are selectively deteriorated and cycle characteristics decrease in some cases. Moreover, in a secondary battery fabricated using a positive electrode active material having wide spread of particle size distribution, the proportion of coarse particles is high, thus the reaction area between the electrolyte solution and the positive electrode active material cannot be sufficiently secured, and the output characteristics decrease in some cases.

Incidentally, in the case of assuming production on an industrial scale, it is not realistic to use a positive electrode active material having an excessively small [(d90 - d10)/average particle size]. Hence, the lower limit of [(d90 - d10)/average particle size] is preferably set to about 0.25 in the consideration of cost and productivity. In addition, the meanings of d10 and d90 in [(d90 - d10)/average particle size] and the method to determine these are the same as those in the metal composite hydroxide described above.

### (Tap density)

The tap density of the positive electrode active material of the present embodiment is not particularly limited but is preferably 1.2 g/cm³ or more and 1.99 g/cm³ or less, more preferably 1.2 g/cm³ or more and 1.9 g/cm³ or less and still more preferably 1.3 g/cm³ or more and 1.7 g/cm³ or less, for example, when the secondary particles 2 have a hollow structure. When the tap density is in the above range, the positive electrode active material has a hollow structure suitable for use in the positive electrode of a secondary battery, and the output characteristics are improved as the contact area with the electrolyte solution increases while the battery capacity per unit volume is improved. On the other hand, when the tap density exceeds 1.99 g/cm³, there are few parts which are hollow in the particle structure, and the average particle size tends to increase, and the output characteristics decrease as the reaction area decreases. In addition, when the spread of particle size distribution is wide, the tap density tends to increase, but in this case, the fine particles are selectively deteriorated and the cycle characteristics decrease in some cases. On the other hand, when the tap density is less than 1.2 g/cm³, the parts which are hollow increase in the particle structure, the particle strength decreases, and thus the cycle characteristics decrease in some cases. Moreover, when the tap density is low, the packing property of the positive electrode active material decreases and it is difficult to increase the battery capacity per unit volume.

### (Sintering aggregation)

In the positive electrode active material of the present embodiment, it is preferable that [d50 of lithium-metal composite oxide/d50 of metal composite hydroxide], which is an index indicating degree of sintering aggregation of particles, (hereinafter referred to as "d50 ratio") is 0.95 or more and 1.05 or less. When the d50 ratio is in the above range, the positive electrode active material can be composed of the lithium-metal composite oxide 20 in which the secondary particles are hardly aggregated although sintering aggregation occurs. A secondary battery fabricated using such a positive electrode active material exhibits high packing property, a high capacity, little variations in characteristics, and excellent uniformity.

On the other hand, when the d50 ratio exceeds 1.05, the specific surface area may decrease or the packing property may decrease as the particles are sintered and aggregated. A secondary battery fabricated using such a positive electrode active material exhibits decreased reactivity and thus may exhibit decreased output characteristics and a decreased capacity. In addition, when a secondary battery fabricated using such a positive electrode active material is repeatedly charged and discharged, the secondary particles selectively collapse from the portions which have weak strength and at which the secondary particles are aggregated in the positive electrode, and thus the cycle characteristics may be greatly impaired.

In addition, when the d50 ratio is less than 1.0, some of the primary particles 21 are missing from the inside of the secondary particles 22 and the particle size decreases as the lithium-metal composite oxide 20 is crushed. In particular, when the d50 ratio is less than 0.95, a large amount of fine powders are generated since a large number of primary particles 21 are missing, and the particle size distribution may be widened.

Incidentally, d50 of the metal composite hydroxide means d50 of the metal composite hydroxide 10 used as a precursor when the lithium-metal composite oxide 20 is produced. Moreover, d50 of the lithium-metal composite oxide 20 and metal composite hydroxide 10 can be measured using a laser light diffraction scattering particle size analyzer and means a particle size when the number of particles in each particle size is accumulated from the smaller particle size side and the accumulated volume is 50% of the total volume of all particles.

### (Crystallite diameter)

The crystallite diameter of (003) plane in the positive electrode active material according to the present embodiment attained by powder X-ray diffraction measurement can be further increased as compared with that in a positive electrode active material fabricated using a metal composite hydroxide obtained by uniformly adding tungsten throughout the crystallization process as a precursor as in the conventional production method. The crystallite diameter of (003) plane in the positive electrode active material can be set to, for example, 110 nm or more and is preferably adjusted to 120 nm or more. When the crystallite diameter of (003) plane in the positive electrode active material is 120 nm or more, the crystallinity is high and the output characteristics and thermal stability of a secondary battery fabricated using this positive electrode active material as the positive electrode are both improved since the secondary battery has low reaction resistance. On the other hand, when the crystallite diameter of (003) plane is less than 120 nm, the thermal stability of the secondary battery may decrease. Incidentally, the upper limit of the crystallite diameter of (003) plane is not particularly limited but can be set to, for example, 200 nm or less, and is preferably 120 nm or more and 150 nm or less. The positive electrode active material of the present embodiment can maintain high crystallinity as the metal composite hydroxide 10 having the tungsten-concentrated layer 3 on the surface is used as a precursor as described above, and thus the crystallite diameter of (003) plane can be set to the above range.

### (Composition)

The positive electrode active material contains lithium, nickel, manganese, and tungsten and optionally cobalt and element M and the ratio (B) of the number of atoms of the respective metal elements is represented by Li:Ni:Mn:Co:W:M=(1+u):x:y:z:a:b (x + y + z = 1, -0.05 ≤ u ≤ 0.50, 0.3 ≤ x ≤ 0.95, 0.05 ≤ y ≤ 0.55, 0 ≤ z ≤ 0.4, 0 < a≤ 0.1, 0 ≤ b ≤ 0.1, and M is one or more elements selected from Mg, Ca, Al, Ti, V, Cr, Zr, Nb, Mo, Hf, and Ta). In the ratio (B) of the number of atoms, the preferable range of the composition of the respective elements and the significance thereof are the same as those in the following Formula (B). For this reason, description of these matters is omitted here.

Moreover, the positive electrode active material of the present embodiment may be represented by, for example, Formula (B): Li₁₊ᵤNiₓMn_{y}Co_{z}WₐM_{b}O₂ (-0.05 ≤ u ≤ 0.50, x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta).

In Formula (B), the value of u indicating the range of the content (1 + u) of lithium (Li) is preferably -0.05 or more and 0.50 or less, more preferably 0 or more and 0.50 or less, and still more preferably 0 or more and 0.35 or less. When the value of u is in the above range, the output characteristics and capacity characteristics of a secondary battery fabricated using this positive electrode active material as a positive electrode material can be improved. In contrast, when the value of u is less than -0.05, the positive electrode resistance of the secondary battery increases and the output characteristics cannot be improved. On the other hand, when the value of u exceeds 0.50, the initial discharge capacity may decrease or the positive electrode resistance may increase.

In Formula (B), the value of x indicating the content of nickel (Ni) is preferably 0.3 or more and 0.95 or less and more preferably 0.3 or more and 0.9 or less. Nickel is an element which contributes to an increase in potential and capacity of a secondary battery. When the value of x is less than 0.3, the capacity characteristics of the secondary battery using this positive electrode active material cannot be improved. On the other hand, when the value of x exceeds 0.95, the contents of other elements decrease and the effect by the other elements cannot be attained.

In Formula (B), the value of y indicating the content of manganese (Mn) is preferably 0.05 or more and 0.55 or less and more preferably 0.10 or more and 0.40 or less. Manganese is an element which contributes to the improvement of thermal stability. When the value of y is less than 0.05, the thermal stability of a secondary battery fabricated using this positive electrode active material cannot be improved. On the other hand, when the value of y exceeds 0.55, Mn is eluted from the positive electrode active material at the time of high temperature operation and the charge and discharge cycle characteristics may be deteriorated.

In Formula (B), the value of z indicating the content of cobalt (Co) is preferably 0 or more and 0.4 or less and more preferably 0.10 or more and 0.35 or less. Cobalt is an element which contributes to the improvement of charge and discharge cycle characteristics. When the value of z exceeds 0.4, the initial discharge capacity of a secondary battery fabricated using this positive electrode active material may greatly decrease.

In Formula (B), the value of a indicating the content of tungsten (W) is more than 0 and 0.1 or less, preferably 0.001 or more and 0.01 or less, and more preferably 0.0045 or more and 0.006 or less when the sum of the number of moles of Ni, Co, and Mn is regarded as 1. When the value of a is in the above range, the positive electrode active material exhibits superior output characteristics and cycle characteristics while maintaining high crystallinity. Moreover, W is mainly contained in the surface layer of the primary particles 21 in the vicinity of the surface of the secondary particles 22 or the grain boundary between the primary particles 21 in the positive electrode active material as described above.

In the positive electrode active material of the present embodiment, element M may be contained in addition to the metal elements described above in order to further ameliorate the durability and output characteristics of the secondary battery. As such element M, one or more selected from magnesium (Mg), calcium (Ca), aluminum (Al), titanium (Ti), vanadium (V), chromium (Cr), zirconium (Zr), niobium (Nb), molybdenum (Mo), hafnium (Hf), and tantalum (Ta) can be used.

In Formula (B), the value of b indicating the content of element M is preferably 0 or more and 0.1 or less, more preferably 0 or more and 0.05 or less, and still more preferably 0.001 or more and 0.05 or less when the sum of the number of moles of Ni, Co, and Mn is regarded as 1. When the value of b is more than 0.1, the metal elements contributing to the redox reaction decrease and thus the battery capacity may decrease.

It is preferable that the composition of the positive electrode active material represented by Formula (B) is set to Formula (B1): Li₁₊ᵤNiₓMn_{y}Co_{z}WₐM_{b}O₂ (-0.05 ≤ u ≤ 0.20, x + y + z = 1, 0.7 < x ≤ 0.95, 0.05 ≤ y ≤ 0.1, 0 ≤ z ≤ 0.2, 0 < a ≤ 0.1, 0 ≤ b ≤ 0.1, and M is one or more elements selected from Mg, Ca, Al, Ti, V, Cr, Zr, Nb, Mo, Hf, and Ta) from the viewpoint of further ameliorating the capacity characteristics of the secondary battery. Among these, the value of x in Formula (B1) is more preferably set to 0.7 < x ≤ 0.9 and still more preferably set to 0.7 < x ≤ 0.85 from the viewpoint of achieving both thermal stability and battery capacity.

Moreover, it is preferable that the composition is set to Formula (B2) : Li₁₊ᵤNiₓMn_{y}Co_{z}WₐM_{b}O₂ (-0.05 ≤ u ≤ 0.50, x + y + z = 1, 0.3 ≤ x ≤ 0.7, 0.1 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta) from the viewpoint of further ameliorating the thermal stability.

### 4. Method for producing positive electrode active material for non-aqueous electrolyte secondary battery

Fig. 6 is a diagram illustrating an example of the method for producing a positive electrode active material according to the present embodiment. By the production method of the present embodiment, a positive electrode active material containing the above-described lithium-metal composite oxide 20 can be easily produced on an industrial scale. Incidentally, the positive electrode active material containing the lithium-metal composite oxide 20 is not particularly limited as long as it has the above-described specific structure, average particle size, and particle size distribution and can be obtained by a known production method.

As illustrated in Fig. 6, the method for producing a positive electrode active material according to the present embodiment includes a process (step S30) of obtaining a lithium mixture by mixing the metal composite hydroxide 10 obtained by the above-described production method with a lithium compound and a process (step S40) of obtaining the lithium-metal composite oxide 20 by firing the lithium mixture. Incidentally, processes such as a thermal treatment process and a calcination process may be added other than the processes described above, if necessary.

Tungsten in the tungsten-concentrated layer 3 formed on the surface layer of the metal composite hydroxide 10 reacts with the lithium compound in the mixing process (step S30) and the firing process (step S40) to form the compound 23 containing tungsten and lithium on the surface layer of the primary particles 21 in the lithium-metal composite oxide 20 and at the grain boundary between the primary particles 21. Hereinafter, an example of the method for producing a positive electrode active material according to the present embodiment will be described with reference to Fig. 6.

### (Mixing process)

First, at least either of the metal composite hydroxide 10 or a metal composite oxide obtained by subjecting the metal composite hydroxide to a thermal treatment (hereinafter, these are collectively referred to as "precursor") is mixed with a lithium compound to obtain a lithium mixture (step S30).

In the mixing process (step S30), the precursor and the lithium compound are mixed so that the ratio (Li/Me) of the sum (Me) of the number of atoms of metal atoms other than lithium in the lithium mixture, specifically nickel, cobalt, and manganese to the number of atoms of lithium (Li) is 0.95 or more and 1.5 or less, preferably 1.0 or more and 1.5 or less, more preferably 1.0 or more and 1.35 or less, and still more preferably 1.0 or more and 1.2 or less. In other words, Li/Me does not change before and after the firing process (step S40), and thus the precursor and the lithium compound are mixed so that Li/Me in the mixing process becomes Li/Me of the intended positive electrode active material.

The lithium compound used in the mixing process (Step S30) is not particularly limited, but it is preferable to use lithium hydroxide, lithium nitrate, lithium carbonate, or any mixture thereof from the viewpoint of easy procurement. In particular, it is preferable to use lithium hydroxide or lithium carbonate in consideration of ease of handling and quality stability.

It is preferable that the precursor and the lithium compound are sufficiently mixed to an extent to which fine powders are not generated. Insufficient mixing may cause variation in Li/Me among individual particles, and sufficient battery characteristics cannot be attained in some cases. Incidentally, a general mixer can be used for mixing. For example, a shaker mixer, a Lodige mixer, a Julia mixer, and a V blender can be used.

### (Thermal treatment process)

Incidentally, in the method for producing a positive electrode active material of the present embodiment, the metal composite hydroxide 10 may be subjected to a thermal treatment and then mixed with a lithium compound (not illustrated) by arbitrarily providing a thermal treatment process before the mixing process (step S30). Here, the particles obtained after the thermal treatment process contain not only the particles of the metal composite hydroxide 10 from which at least a part of the excess moisture has been removed in the thermal treatment process but also particles of metal composite oxide converted from a hydroxide to an oxide by the thermal treatment process or a mixture thereof.

The thermal treatment process is a process of removing excess moisture contained in the metal composite hydroxide 10 by heating the metal composite hydroxide 10 to 105°C or more and 750°C or less and performing a thermal treatment. This makes it possible to decrease the moisture content which remains until the firing process is terminated to a certain amount and to suppress the variation in the composition of the positive electrode active material obtained.

The thermal treatment temperature in the thermal treatment process is 105°C or more and 750°C or less. When the thermal treatment temperature is less than 105°C, excess moisture in the metal composite hydroxide 10 cannot be sufficiently removed and variation cannot be sufficiently suppressed in some cases. On the other hand, when the thermal treatment temperature exceeds 700°C as well, not only a further effect cannot be expected but also the production cost increases.

Incidentally, in the thermal treatment process, it is only required to remove moisture to such an extent to which the proportions of the number of atoms of each metal component in the positive electrode active material and the number of atoms in Li do not vary, and thus it is not necessarily required to convert all the metal composite hydroxides 10 to composite oxides. However, in order to decrease variations in the proportions of the number of atoms of each metal component and the number of Li atoms, it is preferable to convert all the metal composite hydroxides 10 to composite oxides by performing heating at 400°C or more. Incidentally, the above-described variations can be further suppressed by determining the metal components contained in the metal composite hydroxide 10 depending on the thermal treatment conditions by analysis in advance and determining the mixing ratio with the lithium compound.

The atmosphere in which the thermal treatment is performed is not particularly limited and may be a nonreducing atmosphere, but the thermal treatment is preferably performed in an air stream in which the thermal treatment can be simply performed.

Moreover, the thermal treatment time is not particularly limited but is preferably at least 1 hour or more and more preferably 5 hours or more and 15 hours or less from the viewpoint of sufficiently removing excess moisture in the metal composite hydroxide 10.

### (Firing process)

Subsequently, the lithium mixture obtained in the mixing process (step S30) is fired to obtain the lithium-metal composite oxide 20 (step S40). In the present process, firing is performed under predetermined conditions to diffuse lithium into the precursor, and the lithium-metal composite oxide 20 is obtained. The lithium-metal composite oxide 20 obtained may be used as a positive electrode active material as it is or used as a positive electrode active material after being subjected to the adjustment of particle size distribution by a crushing process as to be described later.

### [Firing temperature]

The firing temperature of the lithium mixture is preferably 650°C or more and 980°C or less. In a case in which the firing temperature is less than 650°C, lithium does not sufficiently diffuse into the precursor, and excess lithium and the unreacted metal composite hydroxide 10 or the lithium-metal composite oxide 20 may remain or the crystallinity of the lithium-metal composite oxide 20 obtained may be insufficient. On the other hand, when the firing temperature exceeds 980°C, the lithium composite oxide particles are vigorously sintered with each other, abnormal particle growth is caused, and the proportion of irregular coarse particles increases in some cases.

Incidentally, in the case of attempting to obtain the positive electrode active material represented by Formula (B1), the firing temperature is preferably set to 650°C or more and 900°C or less. On the other hand, in the case of attempting to obtain the positive electrode active material represented by Formula (B2), the firing temperature is preferably set to 800°C or more and 980°C or less.

Moreover, the rate of temperature increase in the firing process (step S40) is set to preferably 2°C/min or more and 10°C/min or less and more preferably 5°C/min or more and 10°C/min or less. Furthermore, the lithium mixture may be maintained at a temperature close to the melting point of the lithium compound used for preferably 1 hour or more and 5 hours or less and more preferably 2 hours or more and 5 hours or less during the firing process (step S40). This makes it possible to more uniformly react the precursor with the lithium compound.

### [Firing time]

The maintenance time (firing time) at the firing temperature is set to preferably at least 2 hours or more and more preferably 4 hours or more and 24 hours or less. When the maintenance time at the firing temperature is less than 2 hours, it is concerned that lithium does not sufficiently diffuse into the precursor, and excess lithium and particles of unreacted precursor remain or the crystallinity of particles of the lithium-metal composite oxide 20 obtained is insufficient.

Incidentally, the cooling rate from the firing temperature to at least 200°C after termination of the maintenance time is set to preferably 2°C/min or more and 10°C/min or less and more preferably 3°C/min or more and 7°C/min or less. By controlling the cooling rate in such a range, it is possible to prevent the facilities such as the mortar from being damaged by rapid cooling while securing the productivity.

### [Firing atmosphere]

The atmosphere when firing is set to preferably an oxidizing atmosphere, and more preferably an atmosphere having an oxygen concentration of 18 vol% or more and 100 vol% or less, and particularly preferably a mixed atmosphere of oxygen having the above oxygen concentration and an inert gas. In other words, firing is preferably performed in the atmosphere or an oxygen stream. When the oxygen concentration is less than 18 vol%, it is concerned that the crystallinity of particles of the lithium-metal composite oxide 20 is insufficient.

Incidentally, the furnace used for the firing process (step S40) is not particularly limited as long as it can heat the lithium mixture in the atmosphere or an oxygen stream. However, from the viewpoint of maintaining the atmosphere in the furnace uniformly, an electric furnace which does not cause gas generation is preferable and both a batch type electric furnace and a continuous type electric furnace can be suitably used. The same applies to the furnace used in the thermal treatment process (step S20) and the calcination process to be described later.

### (Calcination process)

Incidentally, when lithium hydroxide and lithium carbonate are used as the lithium compound, a calcination process may be performed after the mixing process (step S30) and before the firing process (step S40). The calcination process is a process of calcining the lithium mixture at a temperature lower than the firing temperature to be described later and at 350°C or more and 800°C or less and preferably 450°C or more and 780°C or less. This makes it possible to sufficiently diffuse lithium into the precursor and to obtain more uniform particles of lithium-metal composite oxide.

Incidentally, the maintenance time at the temperature is set to preferably 1 hour or more and 10 hours or less and more preferably 3 hours or more and 6 hours or less. Moreover, the atmosphere in the calcination process is set to preferably an oxidizing atmosphere, and more preferably an atmosphere having an oxygen concentration of 18 vol% or more and 100 vol% or less in the same manner as in the firing process to be described later.

### (Crushing process)

The lithium-metal composite oxide 20 obtained by the firing process (Step S40) is aggregated or slightly sintered in some cases. In such a case, it is preferable to crush the aggregate or sintered body of particles of the lithium-metal composite oxide 20. This makes it possible to adjust the average particle size and particle size distribution of the positive electrode active material obtained to suitable ranges. Incidentally, crushing means operation to apply mechanical energy to the aggregate which is composed of a plurality of secondary particles 22 and generated by sintering necking between the secondary particles 22 when firing, thus to separate the secondary particles from each other while hardly destroying the secondary particles themselves, and to loosen the aggregate.

As the method of crushing, a known means can be used and, for example, a pin mill and a hammer mill can be used. Incidentally, it is preferable to adjust the crushing force to a proper range so as not to destroy the secondary particles at this time.

### 5. Non-aqueous electrolyte secondary battery

The non-aqueous electrolyte secondary battery of the present embodiment includes a positive electrode containing the positive electrode active material described above as a positive electrode material. The non-aqueous electrolyte secondary battery may include the same constituents as those of a general non-aqueous electrolyte secondary battery, such as a positive electrode, a negative electrode, a separator, and a non-aqueous electrolyte solution, and includes, for example, a positive electrode, a negative electrode, and a non-aqueous electrolyte solution. In addition, the non-aqueous electrolyte secondary battery may include, for example, a positive electrode, a negative electrode, and a solid electrolyte. It should be noted that the embodiments described below are merely examples, and the non-aqueous electrolyte secondary battery of the present invention can also be applied to forms subjected to various modifications and improvements based on the embodiments described in the present specification.

### (1) Constituent members

### (Positive electrode)

A positive electrode of a non-aqueous electrolyte secondary battery is fabricated, for example, as follows using the positive electrode active material for non-aqueous electrolyte secondary battery obtained by the present embodiment.

First, a conductive material and a binding agent are mixed with the powdery positive electrode active material obtained, activated carbon and a solvent for viscosity adjustment and the like are further added to the mixture if necessary, and these are kneaded to prepare a positive electrode mixture paste. At that time, the mixing ratio of the materials in the positive electrode mixture paste is also an important factor for determining the performance of a non-aqueous electrolyte secondary battery. For example, when the solid content in the positive electrode mixture excluding the solvent is regarded as 100 parts by mass, the content of positive electrode active material is set to 60 to 95 parts by mass, the content of conductive material is set to 1 to 20 parts by mass, and the content of binding agent is set to 1 to 20 parts by mass in the same manner as in the positive electrode of a general non-aqueous electrolyte secondary battery.

The positive electrode mixture paste obtained is, for example, applied to the surface of an aluminum foil collector and dried to scatter the solvent. If necessary, pressurization may be performed using a roll press and the like to increase the electrode density. A sheet-like positive electrode can be fabricated in this manner. The sheet-like positive electrode can be cut into a proper size according to the intended battery and used in the fabrication of battery. However, the method for fabricating the positive electrode is not limited to the above-described example, and other methods may be adopted.

As the conductive material, for example, graphite (natural graphite, artificial graphite, expanded graphite, and the like), and carbon black-based materials such as acetylene black and ketjen black can be used.

A binding agent plays a role of binding the active material particles together and, for example, polyvinylidene fluoride (PVDF), polytetrafluoroethylene (PTFE), fluorine rubber, ethylene propylene diene rubber, styrene butadiene, cellulose-based resin, and polyacrylic acid can be used.

Moreover, a solvent for dispersing the positive electrode active material, the conductive material, and activated carbon and dissolving the binding agent can be added to the positive electrode mixture, if necessary. Specifically, an organic solvent such as N-methyl-2-pyrrolidone can be used as the solvent. In addition, activated carbon can be added to the positive electrode mixture in order to increase the electric double layer capacity.

### (Negative electrode)

In the negative electrode, metal lithium, a lithium alloy, or one formed by applying a negative electrode mixture prepared by mixing a paste-like negative electrode active material capable of inserting and de-inserting lithium ions with a binding agent and adding a proper solvent to the mixture to the surface of a metal foil collector such as copper, and performing drying, and performing compression in order to increase the electrode density if necessary is used.

As the negative electrode active material, for example, a substance containing lithium such as metal lithium or a lithium alloy and natural graphite, artificial graphite, a fired body of an organic compound such as a phenol resin, and a powdery body of a carbon substance such as coke, which can insert and de-insert lithium ions can be used. In this case, as the negative electrode binding agent, a fluorine-containing resin such as PVDF can be used as in the positive electrode, an organic solvent such as N-methyl-2-pyrrolidone can be used as the solvent for dispersing these active materials and the binding agent. Moreover, as the binding agent, an aqueous binder such as styrene-butadiene rubber may be used other than the organic binder such as PVDF. In addition, carboxymethyl cellulose (CMC) may be used as a viscosity modifier in the aqueous binder. For example, an aqueous binder in which styrene-butadiene latex as a main additive and CMC as a viscosity modifier are concurrently used can increase the binding force in a small amount.

### (Separator)

A separator is disposed to be sandwiched between the positive electrode and the negative electrode and has a function of separating the positive electrode and the negative electrode from each other and retaining the electrolyte. As such a separator, for example, a thin film of polyethylene, polypropylene or the like having a large number of fine holes can be used, the separator is not be particularly limited as long as it has the function.

### (Non-aqueous electrolyte)

A non-aqueous electrolyte solution can be used as the non-aqueous electrolyte. The non-aqueous electrolyte solution is obtained by dissolving a lithium salt as a supporting salt in an organic solvent. Moreover, one obtained by dissolving a lithium salt in an ionic liquid may be used as the non-aqueous electrolyte solution. Incidentally, an ionic liquid refers to a salt which is composed of a cation other than lithium ion and an anion and is in a liquid state even at room temperature.

As the organic solvent, one selected from cyclic carbonates such as ethylene carbonate, propylene carbonate, butylene carbonate, and trifluoropropylene carbonate, chain carbonates such as diethyl carbonate, dimethyl carbonate, ethyl methyl carbonate, and dipropyl carbonate, further, ether compounds such as tetrahydrofuran, 2-methyltetrahydrofuran, and dimethoxyethane, sulfur compounds such as ethyl methyl sulfone and butane sultone, and phosphorus compounds such as triethyl phosphate and trioctyl phosphate can be used singly or two or more of these can be used in mixture.

As the supporting salt, LiPF₆, LiBF₄, LiClO₄, LiAsF₆, LiN(CF₃SO₂)₂, any composite salt thereof, and the like can be used.

Furthermore, the non-aqueous electrolyte solution may contain a radical scavenger, a surfactant, a flame retardant, and the like.

Moreover, a solid electrolyte may be used as the non-aqueous electrolyte. The solid electrolyte has property capable of withstanding a high voltage. Examples of the solid electrolyte include inorganic solid electrolytes and organic solid electrolytes.

As the inorganic solid electrolyte, an oxide-based solid electrolyte, a sulfide-based solid electrolyte, and the like are used.

The oxide-based solid electrolyte is not particularly limited, and any oxide-based solid electrolyte can be used as long as it contains oxygen (O) and exhibits lithium ion conductivity and electron insulating property. Examples of the oxide-based solid electrolyte include lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}Al_{X}Ti_{2-X}(PO₄)₃(0 ≤ X ≤ 1), Li_{1+X}Al_{X}Ge_{2- X}(PO₄)₃(0 ≤ X ≤ 1), LiTi₂(PO₄)₃, Li_{3X}La_{2/3-X}TiO₃ (0 ≤ X ≤ 2/3), Li₅La₃Ta₂O₁₂, Li₇La₃Zr₂O₁₂, and Li₆BaLa₂Ta₂O₁₂, Li_{3.6}Si_{0.6}P_{0.4}O₄.

The sulfide-based solid electrolyte is not particularly limited, and any sulfide-based solid electrolyte can be used as long as it contains sulfur (S) and exhibits lithium ion conductivity and electron insulating property. Examples of the sulfide-based solid electrolyte include Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiP0₄-Li₂S-SiS, LiI-Li₂S-P₂O₅, and LiI-Li₃PO₄-P₂S₅.

Incidentally, as the inorganic solid electrolyte, inorganic solid electrolytes other than those described above may be used and, for example, Li₃N, LiI, Li₃N-LiI-LiOH, and the like may be used.

The organic solid electrolyte is not particularly limited as long as it is a polymer compound exhibiting ionic conductivity, and, for example, polyethylene oxide, polypropylene oxide, and copolymers thereof can be used. Moreover, the organic solid electrolyte may contain a supporting salt (lithium salt). Incidentally, in the case of using a solid electrolyte, the solid electrolyte may also be mixed in the positive electrode material in order to secure the contact of the electrolyte with the positive electrode active material.

### (2) Non-aqueous electrolyte secondary battery

The non-aqueous electrolyte secondary batteries according to the present embodiment including the positive electrode, the negative electrode, the separator, and the non-aqueous electrolyte solution, and the positive electrode, the negative electrode, and the solid electrolyte, which have been described above, can be formed in various shapes such as a cylindrical shape and a stacked shape.

In the case of using a non-aqueous electrolyte solution as the non-aqueous electrolyte, the positive electrode and the negative electrode are stacked with the separator interposed therebetween to form an electrode body, the electrode body obtained is impregnated with a non-aqueous electrolyte solution, the positive electrode collector and the positive electrode terminal communicating with the outside are connected to each other using a leader for collector and the like, the negative electrode collector and the negative electrode terminal communicating with the outside are connected to each other using a leader for collector, and the battery case is hermetically sealed to complete a non-aqueous electrolyte secondary battery.

### (3) Characteristics of non-aqueous electrolyte secondary battery

The non-aqueous electrolyte secondary battery of the present invention exhibits excellent capacity characteristics, output characteristics, and cycle characteristics since the above-described positive electrode active material is used as a positive electrode material in this secondary battery as described above. Moreover, it can be said that this secondary battery is superior in the thermal stability to a secondary battery in which a positive electrode active material containing conventional lithium-nickel-based oxide particles is used as well.

### (4) Application

The non-aqueous electrolyte secondary battery of the present invention exhibits excellent capacity characteristics, output characteristics, and cycle characteristics as described above and can be suitably utilized as a power source for small-sized portable electronic devices (notebook personal computers, telephone terminals and the like) which are required to exhibit these characteristics at a high level. In addition, the non-aqueous electrolyte secondary battery of the present invention also exhibits excellent thermal stability, and not only can be decreased in size and have a high output, but also can simplify an expensive protection circuit, and thus can be suitably utilized as a power source for transportation equipment (for example, a power source for driving vehicles) to be mounted in a restricted space.

### Examples

Hereinafter, the present invention will be described in detail with reference to Examples and Comparative Examples. Incidentally, in the following Examples and Comparative Examples, the respective reagent grade samples manufactured by FUJIFILM Wako Pure Chemical Corporation were used in the fabrication of metal composite hydroxides and positive electrode active materials unless otherwise stated. In addition, throughout the nuclear generation process and particle growth process, the pH value of the reaction aqueous solution was measured using a pH controller (NPH-690D manufactured by Nisshin Rika Co., Ltd.) and the amount of sodium hydroxide aqueous solution supplied was adjusted based on this measured value to control the fluctuation range of pH value of the reaction aqueous solution in each process in a range of ± 0.2.

### (Example 1; Reference Example)

### (a) Production of metal composite hydroxide

### [Nuclear generation process]

First, 1.2 L of water was put in a reaction tank, and the temperature in the tank was set to 40°C while stirring the water at 790 rpm. At this time, oxygen gas was introduced into the reaction tank and allowed to flow for 30 minutes to set the reaction atmosphere to an oxidizing atmosphere having an oxygen concentration of more than 1 vol%. Subsequently, an appropriate amount of 25 mass% sodium hydroxide aqueous solution and 25 mass% ammonia water was supplied into the reaction tank, and the pH value was adjusted to 12.5 at a liquid temperature of 25°C and the ammonium ion concentration was adjusted to 10 g/L to form a pre-reaction aqueous solution.

At the same time, nickel sulfate, cobalt sulfate, manganese sulfate, and zirconium sulfate were dissolved in water so that the molar ratio of the respective metal elements was Ni: Mn : Co : Zr = 38 : 30 : 32 : 0.2 to prepare a first raw material aqueous solution at 2 mol/L.

Next, the first raw material aqueous solution was supplied to the pre-reaction aqueous solution at 13 ml/min to form an aqueous solution for nuclear generation process, and nuclear generation was performed for 2.5 minutes. At this time, 25 mass% sodium hydroxide aqueous solution and 25 mass% ammonia water were supplied in a timely manner to maintain the pH value and ammonium ion concentration in the aqueous solution for nuclear generation in the ranges described above.

### [Particle growth process]

After the nuclear generation was terminated, supply of all the aqueous solutions was temporarily stopped as well as sulfuric acid was added into the reaction tank to adjust the pH value to 11.6 at a liquid temperature of 25°C, and an aqueous solution for particle growth was thus formed. After it was confirmed that the pH value reached a predetermined value, the first raw material aqueous solution was supplied into the reaction tank to grow the nuclei (particles) generated in the nuclear generation process.

In order to set the atmosphere in the reaction tank to a non-oxidizing atmosphere in the middle of the particle growth process, the supply of the raw material aqueous solution was once stopped, the oxygen gas was switched to nitrogen gas, the reaction atmosphere was switched to a non-oxidizing atmosphere having an oxygen concentration of 1 vol% or less by introducing nitrogen gas into the reaction tank, and the supply of the first raw material aqueous solution was restarted at this time point.

### [Second crystallization process]

As the second raw material aqueous solution, the first raw material aqueous solution and an aqueous solution containing tungsten were used. As the aqueous solution containing tungsten, a sodium tungstate aqueous solution was prepared by dissolving sodium tungstate dihydrate in water so that the molar ratio of the respective metal elements of the hydroxide obtained was Ni : Co : Mn : Zr : W = 38 : 30 : 32 : 0.2 : 0.5.

From the time point at which 19/20 hours (95%) with respect to the entire time for performing particle growth elapsed, the first aqueous solution was supplied as well as the supply of the sodium tungstate aqueous solution into the reaction tank was started (addition range: 5%). The particle growth process was terminated by stopping the supply of all the aqueous solutions. Thereafter, the product obtained was washed with water, filtered, and dried to obtain a powdery metal composite hydroxide.

Incidentally, in the particle growth process in the first crystallization process and the second crystallization process, 25 mass% sodium hydroxide aqueous solution and 25 mass% ammonia water were supplied in a timely manner to maintain the pH value and ammonium ion concentration in the aqueous solution for particle growth in the ranges described above throughout these processes. Moreover, the reaction atmosphere was adjusted to a non-oxidizing atmosphere having an oxygen concentration of 1 vol% or less by introduction of nitrogen gas. Incidentally, the supply rate of the first raw material aqueous solution was set to be constant (13 ml/min) throughout the crystallization process.

### (b) Evaluation of metal composite hydroxide

It has been confirmed that this metal composite hydroxide is represented by a formula: Ni_{0.38}Mn_{0.30}Co_{0.32}Zr_{0.002}W_{0.005}(OH)₂ by analysis using an ICP atomic emission spectrometer (ICPE-9000ICPE-9000 manufactured by Shimadzu Corporation).

In addition, the average particle size of the metal composite hydroxide was measured using a laser light diffraction scattering particle size analyzer (Microtrac HRA manufactured by Nikkiso Co., Ltd.) as well as d10 and d90 were measured, and [(d90 - d10)/average particle size] that was an index indicating the spread of particle size distribution was calculated. As a result, it has been confirmed that the average particle size of the metal composite hydroxide is 5.4 µm and [(d90 - d10)/average particle size] is 0.43.

In addition, in order to confirm the presence or absence of the tungsten-concentrated layer in the metal composite hydroxide and the thickness thereof, surface analysis of the metal composite hydroxide cross section was performed using an energy dispersive X-ray analyzer (EDX) mounted on a scanning transmission electron microscope (HD-2300A manufactured by Hitachi High-Technologies Corporation). As a result, it has been confirmed that a site (tungsten-concentrated layer) in which tungsten is present in a concentrated state is formed on the surface layer of the metal composite hydroxide and the thickness (average range of the thickness of each secondary particle analyzed) thereof is 3 to 8 nm.

Moreover, the tap density was measured using a shaking specific gravity measuring instrument (KRS-409 manufactured by Kuramochi Kagakukikai Seisakusho) after the metal composite hydroxide obtained was densely packed by a method in which the metal composite hydroxide was packed in a 20 ml graduated cylinder and the graduated cylinder was repeatedly allowed to freely fall from a height of 2 cm 500 times. The production conditions, the composition of the metal composite hydroxide obtained, and the evaluation results are presented in Table 1.

### (c) Fabrication of positive electrode active material

The metal composite hydroxide obtained as described above was sufficiently mixed with lithium carbonate so that Li/Me was 1.14 using a shaker mixer device (TURBULA TypeT2C manufactured by Willy A. Bachofen (WAB) AG) to obtain a lithium mixture. This lithium mixture was heated to 950°C at a rate of temperature increase of 2.5°C/min in the air stream (oxygen concentration: 21 vol%), fired by being maintained at this temperature for 4 hours, and cooled to room temperature at a cooling rate of about 4°C/min. The positive electrode active material obtained in this manner was in an aggregated or slightly sintered state. For this reason, this positive electrode active material was crushed and the average particle size and particle size distribution thereof were adjusted.

### (d) Evaluation of positive electrode active material

It has been confirmed that this positive electrode active material is represented by a formula: Li_{1.14}Ni_{0.38}Mn_{0.30}Co_{0.32}Zr_{0.002}W_{0.005}O₂ by analysis using an ICP atomic emission spectrometer. In addition, the average particle size of the lithium-metal composite oxide was measured using a laser light diffraction scattering particle size analyzer as well as d10 and d90 were measured, and [(d90 - d10)/average particle size] that was an index indicating the spread of particle size distribution was calculated. As a result, it has been confirmed that the average particle size of the lithium-metal composite oxide is 5.3 µm, [(d90 - d10)/average particle size] is 0.43, and the d50 ratio is 1.04.

Moreover, the crystallite diameter of (003) plane was measured using an X-ray diffractometer (X'Pert PRO manufactured by Spectris) and found to be 1,446 Å (144.6 nm) .

In addition, surface analysis of the lithium-metal composite oxide cross section was performed using an energy dispersive X-ray analyzer (EDX) in order to confirm the distribution of tungsten in the lithium-metal composite oxide using a scanning transmission electron microscope. As a result, it has been confirmed that the lithium-metal composite oxide contains a large amount of tungsten in the surface layer of the primary particles in the vicinity of the surface of the secondary particles and the grain boundary between the primary particles.

Moreover, the tap density was evaluated under the same conditions as for the metal composite hydroxide.

### (e) Fabrication of secondary battery

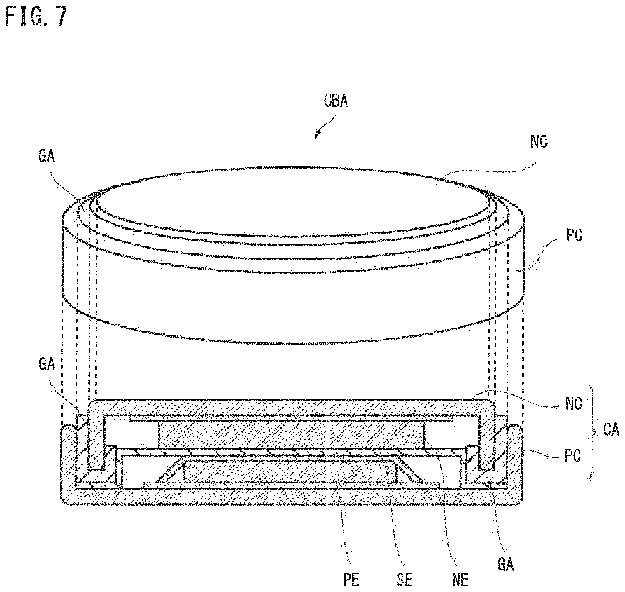

Fig. 7 is a diagram illustrating 2032 type coin-type battery CBA used for the evaluation of battery characteristics. Hereinafter, a method for fabricating a secondary battery will be described with reference to Fig. 7.

The positive electrode active material obtained as described above: 52.5 mg, acetylene black: 15 mg, and PTEE: 7.5 mg were mixed together, press-molded at a pressure of 100 MPa to have a diameter of 11 mm and a thickness of 100 µm, and then dried in a vacuum dryer at 120°C for 12 hours to fabricate positive electrode PE.

Next, 2032 type coin-type battery CBA was fabricated using this positive electrode PE in a glove box in an Ar atmosphere of which the dew point was managed at -80°C. Lithium metal having a diameter of 17 mm and a thickness of 1 mm was used as negative electrode NE of this 2032 type coin-type battery CBA, and an equivalent mixed solution (manufactured by TOMIYAMA PURE CHEMICAL INDUSTRIES, LTD.) of ethylene carbonate (EC) and diethyl carbonate (DEC) containing 1 M LiClO₄ as a supporting electrolyte was used as the electrolyte solution. Moreover, a polyethylene porous film having a thickness of 25 µm was used as separator SE. Incidentally, the 2032 type coin-type battery CBA has gasket GA and is assembled into a coin-shaped battery using positive electrode can PC and negative electrode can NC.

### (f) Battery evaluation

### [Resistance]

The resistance value was measured using the coin-type battery CBA assembled above by the alternating current impedance method at SOC of 20%, and the relative value based on Comparative Example 1 was calculated as the resistance value with respect to Ref. and found to be 92.9%. The evaluation results attained are presented in Table 2.

### (Examples 2 to 8; Examples 7 and 8 are Reference Examples)

Metal composite hydroxides were obtained under the same conditions as in Example 1 except that the addition timing (addition time) of the aqueous solution containing tungsten during the particle growth was changed as presented in Table 1. The evaluation results of the metal composite hydroxides obtained are presented in Table 1, and the evaluation results of the positive electrode active materials obtained are presented in Table 2.

Fig. 8(A) illustrates the distribution of W attained by performing surface analysis of the cross section of the metal composite hydroxide obtained in Example 4 using an energy dispersive X-ray analyzer (EDX) mounted on a scanning transmission electron microscope (HD-2300A manufactured by Hitachi High-Technologies Corporation). As a result, in the metal composite hydroxide obtained in Example 4, it has been confirmed that a site (tungsten-concentrated layer) in which tungsten is present in a concentrated state is detected from the surface layer of secondary particles and the thickness thereof is 40 to 45 nm as in the metal composite hydroxides obtained in other Examples. Moreover, Fig. 9 is a diagram illustrating an example of the SEM images when the cross sections of metal composite hydroxides obtained in Examples are observed under a scanning electron microscope (SEM). As illustrated in Fig. 9, it has been confirmed that the metal composite hydroxides obtained in Examples have a hollow structure.

Next, positive electrode active materials and secondary batteries were obtained under the same conditions as in Example 1 except that the metal composite hydroxides obtained were used as a precursor. The evaluation results of the metal composite hydroxides and positive electrode active materials obtained are presented in Table 1.

Fig. 10 illustrates the distribution of W attained by performing surface analysis of the cross section of the lithium-metal composite oxide obtained in Example 4 using an energy dispersive X-ray analyzer (EDX) mounted on a scanning transmission electron microscope (HD-2300A manufactured by Hitachi High-Technologies Corporation). As a result, in the lithium-metal composite oxide obtained in Example 4, it has been confirmed a large amount of tungsten is present in the surface layer of the primary particles in the vicinity of the surface of the secondary particles and at the grain boundary between the primary particles as in the lithium-metal composite oxides obtained in other Examples.

### (Comparative Example 1)

A metal composite hydroxide was obtained under the same conditions as in Example 1 except that a tungsten compound was added from the start point of the particle growth process (addition range was 100%). The evaluation results of the metal composite hydroxide obtained are presented in Table 1. Next, a positive electrode active material and a secondary battery were fabricated under the same conditions as in Example 1 except that the metal composite hydroxide obtained was used as a precursor. The evaluation results of the positive electrode active material and secondary battery obtained are presented in Tables 1 and 2.

### (Comparative Example 2)

A positive electrode active material (Li_{1.14}Ni_{0.38}Mn_{0.30}Co_{0.32}Zr_{0.002}W_{0.005}O₂) and a secondary battery were fabricated under the same conditions as in Example 1 below that a metal composite hydroxide (Ni_{0.38}Mn_{0.30}Co_{0.32}Zr_{0.002}(OH)₂) not containing tungsten was used and tungsten oxide was also added and mixed when mixing the metal composite hydroxide and lithium carbonate to obtain a lithium mixture. The evaluation results of the positive electrode active material and secondary battery obtained are presented in Tables 1 and 2.

### (Comparative Example 3)

A metal composite hydroxide, a positive electrode active material, and a secondary battery were fabricated under the same conditions as in Example 1 except that a sodium tungstate aqueous solution was not supplied in the second crystallization process when performing the crystallization process. The evaluation results of the metal composite hydroxide, positive electrode active material, and secondary battery obtained are presented in Tables 1 and 2.

**[Table 1]**

| | W compound adding method | Addition of W compound in particle growth process | | | Metal composite hydroxide | | | | | | | | |
|---|---|---|---|---|---|---|---|---|---|---|---|---|---|
| | | | | | Composition | | | | | W concentrated layer thickness | Average particle size (MV) | [(d90 - d10)/average particle size] | Tap density |
| | | Start time | Termination time | Addition range | Ni | Mn | Co | W | M(Zr) | | | | |
| | - | % | % | % | x | y | z | a | b | nm | µm | - | g/cm³ |
| Example 1* | Internally added | 95 | 100 | 5 | 0.38 | 0.30 | 0.32 | 0.005 | 0.002 | 3-8 | 5.4 | 0.43 | 1.43 |
| Example 2 | Internally added | 87.5 | 100 | 12.5 | 0.38 | 0.30 | 0.32 | 0. 005 | 0.002 | 20-25 | 5.4 | 0.44 | 1. 41 |
| Example 3 | Internally added | 80 | 100 | 20 | 0.38 | 0.30 | 0.32 | 0.005 | 0.002 | 35-40 | 5.4 | 0.42 | 1.44 |
| Example 4 | Internally added | 75 | 100 | 25 | 0.38 | 0.30 | 0.32 | 0.005 | 0.002 | 40-45 | 5.4 | 0.42 | 1.39 |
| Example 5 | Internally added | 60 | 100 | 40 | 0.38 | 0.30 | 0.32 | 0.005 | 0.002 | 65-70 | 5.4 | 0.44 | 1.34 |
| Example 6 | Internally added | 50 | 100 | 50 | 0.38 | 0.3 | 0.32 | 0.005 | 0.002 | 85-90 | 5.4 | 0.45 | 1.33 |
| Example 7* | Internally added | 30 | 100 | 70 | 0.38 | 0.3 | 0.32 | 0.005 | 0.002 | 120-125 | 5.4 | 0.46 | 1.40 |
| Example 8* | Internally added | 10 | 100 | 90 | 0.38 | 0.3 | 0.32 | 0.005 | 0.002 | 155-160 | 5.4 | 0.44 | 1.34 |
| Comparative Example 1 | Internally added | 0 | 100 | 100 | 0.38 | 0.3 | 0.32 | 0.005 | 0.002 | Not formed | 5.4 | 0.45 | 1.35 |
| Comparative Example 2 | Externally added | - | - | - | 0.38 | 0.3 | 0.32 | 0.005 | 0 | - | 5.4 | 0.45 | 1.38 |
| Comparative Example 3 | - | - | - | - | 0.38 | 0.30 | 0.32 | 0 | 0.002 | - | 5.4 | 0.42 | 1.39 |

| | | | | | | | | | | | | | |
|---|---|---|---|---|---|---|---|---|---|---|---|---|---|
| * Reference Example | | | | | | | | | | | | | |

**[Table 2]**

| | Positive electrode active material | | | | Resistance value |
|---|---|---|---|---|---|
| | Li/Me | d50 ratio | Crystallite diameter of (003) plane | Tap density | |
| | - | - | nm | g/cm³ | % |
| Example 1* | 1.14 | 1.04 | 144.6 | 1.51 | 92.9 |
| Example 2 | 1.14 | 1.05 | 139.1 | 1.42 | 73.4 |
| Example 3 | 1.14 | 1.02 | 129.2 | 1.52 | 75 |
| Example 4 | 1.14 | 0.99 | 127.1 | 1.42 | 77 |
| Example 5 | 1.14 | 0.98 | 123.3 | 1.42 | 79 |
| Example 6 | 1.14 | 0.96 | 135.9 | 1.41 | 80.5 |
| Example 7* | 1.14 | 0.91 | 115.8 | 1.48 | 94 |
| Example 8* | 1.14 | 0.87 | 113.2 | 1.37 | 98 |
| Comparative Example 1 | 1.14 | 0.98 | 111.2 | 1.43 | 100 (reference) |
| Comparative Example 2 | 1.14 | 1.03 | 129.8 | 1.46 | 93 |
| Comparative Example 3 | 1.14 | 1.01 | 146.2 | 1.40 | 178 |

| | | | | | |
|---|---|---|---|---|---|
| *Reference Example | | | | | |

### (Evaluation results)

It has been confirmed that a tungsten-concentrated layer is formed on the surface of the metal composite hydroxides obtained in Examples. Moreover, the positive electrode active materials obtained in Examples had a larger crystallite diameter and a lower resistance value when being used as a positive electrode of a secondary battery as compared with that obtained in Comparative Example 1 in which tungsten was added throughout the crystallization process.

In addition, a tungsten-concentrated layer having a thickness of 100 nm or less was formed in the metal composite hydroxides obtained in Examples 1 to 6, and the positive electrode active materials obtained using these metal composite hydroxides as a precursor had a larger crystallite diameter and a lower resistance value when being used as a positive electrode of a secondary battery as compared with that obtained in Comparative Example 2 in which a tungsten compound was externally added as well.

On the other hand, the positive electrode active material obtained in Comparative Example 3 in which tungsten was not added had a relatively large crystallite diameter, but had a higher resistance value when being used as a positive electrode of a secondary battery, and is indicated to be inferior in output characteristics as compared with those obtained in other Examples and Comparative Examples in which tungsten was added.

Embodiments of the present invention have been described, but the technical scope of the present invention is not limited to the aspects described in the embodiments and the like. One or more of the requirements described in the embodiments and the like may be omitted. In addition, the requirements described in the embodiments and the like can be combined as appropriate.

### Reference Signs List

- 10: Metal composite hydroxide
- 1: Primary particles (metal composite hydroxide)
- 2: Secondary particles (metal composite hydroxide)
- 3: Tungsten-concentrated layer
- 20: Lithium-metal composite oxide
- 21: Primary particles (lithium-metal composite oxide)
- 22: Secondary particles (lithium-metal composite oxide)
- 23: Compound containing tungsten and lithium
- 24: Void
- 25: Hollow part
- 26: Space section
- CBA: Coin-type battery
- CA: Case
- PC: Positive electrode can
- NC: Negative electrode can
- GA: Gasket
- PE: Positive electrode
- NE: Negative electrode
- SE: Separator

## Claims

1. A method for producing a metal composite hydroxide that contains nickel, manganese, and tungsten and optionally cobalt and element M and has a ratio of number of atoms of the respective metal elements represented by Ni : Mn : Co : W : M = x : y : z : a : b, wherein x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta, the method comprising:
a first crystallization process of obtaining first metal composite hydroxide particles by supplying a first raw material aqueous solution containing at least one among the metal elements and an ammonium ion donor to a reaction tank, adjusting a pH of a reaction aqueous solution in the reaction tank, and performing a crystallization reaction; and
a second crystallization process of forming a tungsten-concentrated layer on a surface of the first metal composite hydroxide particles and obtaining second metal composite hydroxide particles by supplying a second raw material aqueous solution containing at least one among the metal elements and a higher amount of tungsten than the first raw material aqueous solution and an ammonium ion donor to a reaction aqueous solution containing the first metal composite hydroxide particles, adjusting a pH of the reaction aqueous solution, and performing a crystallization reaction; wherein
the first crystallization process includes a nuclear generation process of performing nuclear generation and a particle growth process of performing particle growth, and the second crystallization process includes performing particle growth following the particle growth process in the first crystallization process; and
the second crystallization process includes forming the tungsten-concentrated layer so as to have a thickness of 10 nm or more and 100 nm or less in a direction from a surface of the second metal composite hydroxide particles toward a center.

2. The method for producing a metal composite hydroxide according to claim 1, wherein
the particle growth in the first crystallization process and the second crystallization process includes adjusting a pH of the reaction aqueous solution to be lower than a pH value of the reaction aqueous solution in the nuclear generation process and is performed in a non-oxidizing atmosphere having an oxygen concentration of 1 vol% or less.

3. The method for producing a metal composite hydroxide according to claim 1 or 2, wherein the nuclear generation in the first crystallization process is performed in an oxidizing atmosphere having an oxygen concentration of more than 1 vol%.

4. The method for producing a metal composite hydroxide according to any one of claims 1 to 3, wherein addition of the second raw material aqueous solution in the second crystallization process is performed at a time point at which 50% or more and 95% or less of entire time during which particle growth is performed elapses in the first and second crystallization processes.

5. The method for producing a metal composite hydroxide according to any one of claims 1 to 4, wherein supply of the second raw material aqueous solution is performed by separately supplying the first raw material aqueous solution and an aqueous solution containing tungsten to the reaction aqueous solution.

6. The method for producing a metal composite hydroxide according to claim 5, wherein a tungsten concentration in the aqueous solution containing tungsten is 0.1 mol/L or more.

7. A metal composite hydroxide comprising: nickel, manganese, and tungsten and optionally cobalt and element M, and having a ratio of number of atoms of the respective metal elements represented by Ni : Mn : Co : W : M = x : y : z : a : b, wherein x + y + z = 1, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta, wherein
the metal composite hydroxide includes secondary particles formed by aggregation of a plurality of primary particles, the metal composite hydroxide has a tungsten-concentrated layer on a surface layer of the secondary particles, and a thickness of the tungsten-concentrated layer is 10 nm or more and 100 nm or less.

8. The metal composite hydroxide according to claim 7, wherein an average particle size of the metal composite hydroxide is 4.0 µm or more and 9.0 µm or less and [(d90 - d10)/average particle size], which is an index indicating spread of particle size distribution, is 0.65 or less.

9. The metal composite hydroxide according to claims 7 or 8, wherein the secondary particles have a hollow structure and a tap density of the metal composite hydroxide is 1.2 g/cm³ or more and 1.9 g/cm³ or less.

10. A method for producing a positive electrode active material for non-aqueous electrolyte secondary battery, the method comprising:
a process of obtaining a lithium mixture by mixing a lithium compound with at least either of a metal composite hydroxide obtained by the production method according to any one of claims 1 to 6 or a metal composite oxide obtained by subjecting the metal composite hydroxide obtained by the production method according to any one of claims 1 to 6 to a thermal treatment; and
a process of obtaining a lithium-metal composite oxide by firing the lithium mixture.

11. A positive electrode active material for non-aqueous electrolyte secondary battery obtained by the method for producing a positive electrode active material for non-aqueous electrolyte secondary battery according to claim 10, the positive electrode active material comprising: a lithium-metal composite oxide that contains lithium, nickel, manganese, and tungsten and optionally cobalt and element M and has a ratio of the number of atoms of the respective metal elements represented by Li : Ni : Mn : Co : W : M = 1 + u : x : y : z : a : b, wherein x + y + z = 1, -0.05 ≤ u ≤ 0.50, 0.3 ≤ x ≤ 0.95, 0.05 ≤ y ≤ 0.55, 0 ≤ z ≤ 0.4, 0 < a ≤ 0.1, 0 ≤ b ≤ 0.1, and M is one or more elements selected from Mg, Ca, Al, Ti, V, Cr, Zr, Nb, Mo, Hf, and Ta, and a hollow structure having a tap density of 1.2 g/cm³ or more and 1.99 g/cm³ or less, wherein
the lithium-metal composite oxide includes secondary particles formed by aggregation of a plurality of primary particles and a compound containing tungsten and lithium is present, in a concentrated state, on a surface layer of primary particles present on a surface or inside of the secondary particles and at a grain boundary between the primary particles.

12. The positive electrode active material for non-aqueous electrolyte secondary battery according to claim 11, wherein a crystallite diameter of (003) plane attained by powder X-ray diffraction measurement is 120 nm or more.

13. A non-aqueous electrolyte secondary battery comprising: a positive electrode; a negative electrode; a separator; and a non-aqueous electrolyte, wherein the positive electrode active material for non-aqueous electrolyte secondary battery according to claim 11 or 12 is used as a positive electrode material of the positive electrode.

## Patentansprüche

1. Verfahren zur Herstellung eines Metallverbundhydroxids, das Nickel, Mangan und Wolfram sowie optional Kobalt und ein Element M enthält und ein Atomzahlenverhältnis der jeweiligen Metallelemente aufweist, dargestellt durch Ni : Mn : Co : W : M = x : y : z : a : b, wobei x + y + z = 1, 0,3 ≤ x ≤ 0,95, 0,05 ≤ y ≤ 0,55, 0 ≤ z ≤ 0,4, 0 < a ≤ 0,1, 0 ≤ b ≤ 0,1 und M ein oder mehrere Elemente ist, ausgewählt aus Mg, Ca, Al, Ti, V, Cr, Zr, Nb, Mo, Hf und Ta, wobei das Verfahren umfasst:
einen ersten Kristallisationsprozess zum Erhalten erster Metallverbundhydroxidteilchen durch Zuführen einer ersten wässrigen Rohmateriallösung, die mindestens eines der Metallelemente enthält, und eines Ammoniumionendonors in einen Reaktionsbehälter, Einstellen eines pH-Werts einer wässrigen Reaktionslösung im Reaktionsbehälter und Durchführen einer Kristallisationsreaktion; und
einen zweiten Kristallisationsprozess zur Bildung einer wolframkonzentrierten Schicht auf einer Oberfläche der ersten Metallverbundhydroxidteilchen und zum Erhalten zweiter Metallverbundhydroxidteilchen durch Zuführen einer zweiten wässrigen Rohmateriallösung, die mindestens eines der Metallelemente und eine höhere Menge an Wolfram als die erste wässrige Rohmateriallösung enthält, und
eines Ammoniumionendonors zu einer wässrigen Reaktionslösung, die die ersten Metallverbundhydroxidteilchen enthält, Einstellen eines pH-Werts der wässrigen Reaktionslösung und Durchführen einer Kristallisationsreaktion; wobei der erste Kristallisationsprozess einen Keimbildungsprozess zum Durchführen einer Keimbildung und einen Teilchenwachstumsprozess zum Durchführen eines Teilchenwachstums umfasst und der zweite Kristallisationsprozess das Durchführen eines Teilchenwachstums im Anschluss an den Teilchenwachstumsprozess im ersten Kristallisationsprozess umfasst; und
der zweite Kristallisationsprozess die Bildung der wolframkonzentrierten Schicht, so dass diese in einer Richtung von einer Oberfläche der zweiten Metallverbundhydroxidteilchen zu einem Zentrum hin eine Dicke von 10 nm oder mehr und 100 nm oder weniger aufweist, umfasst.

2. Verfahren zur Herstellung eines Metallverbundhydroxids nach Anspruch 1, wobei das Teilchenwachstum im ersten Kristallisationsprozess und im zweiten Kristallisationsprozess das Einstellen eines pH-Werts der wässrigen Reaktionslösung auf einen Wert unterhalb eines pH-Werts der wässrigen Reaktionslösung im Keimbildungsprozess umfasst und in einer nicht oxidierenden Atmosphäre mit einer Sauerstoffkonzentration von 1 Vol.-% oder weniger durchgeführt wird.

3. Verfahren zur Herstellung eines Metallverbundhydroxids nach Anspruch 1 oder 2, wobei die Keimbildung im ersten Kristallisationsprozess in einer oxidierenden Atmosphäre mit einer Sauerstoffkonzentration von mehr als 1 Vol.-% durchgeführt wird.

4. Verfahren zur Herstellung eines Metallverbundhydroxids nach einem der Ansprüche 1 bis 3, wobei die Zugabe der zweiten wässrigen Rohmateriallösung im zweiten Kristallisationsprozess zu einem Zeitpunkt erfolgt, zu dem 50% oder mehr und 95% oder weniger der gesamten Zeit, während der das Teilchenwachstum durchgeführt wird, im ersten und zweiten Kristallisationsprozess verstrichen sind.

5. Verfahren zur Herstellung eines Metallverbundhydroxids nach einem der Ansprüche 1 bis 4, wobei die Zufuhr der zweiten wässrigen Rohmateriallösung dadurch erfolgt, dass die erste wässrige Rohmateriallösung und eine wässrige Lösung, die Wolfram enthält, getrennt der wässrigen Reaktionslösung zugeführt werden.

6. Verfahren zur Herstellung eines Metallverbundhydroxids nach Anspruch 5, wobei eine Wolframkonzentration in der wässrigen Lösung, die Wolfram enthält, 0,1 mol/L oder mehr beträgt.

7. Metallverbundhydroxid, umfassend: Nickel, Mangan und Wolfram sowie optional Kobalt und ein Element M und mit einem Atomzahlenverhältnis der jeweiligen Metallelemente, dargestellt durch Ni : Mn : Co : W : M = x : y : z : a : b, wobei x + y + z = 1, 0,3 ≤ x ≤ 0,95, 0,05 ≤ y ≤ 0,55, 0 ≤ z ≤ 0,4, 0 < a ≤ 0,1, 0 ≤ b ≤ 0,1 und M ein oder mehrere Elemente ist, ausgewählt aus Mg, Ca, Al, Ti, V, Cr, Zr, Nb, Mo, Hf und Ta, wobei
das Metallverbundhydroxid Sekundärteilchen umfasst, gebildet durch eine Aggregation einer Mehrzahl von Primärteilchen, das Metallverbundhydroxid eine wolframkonzentrierte Schicht auf einer Oberflächenschicht der Sekundärteilchen aufweist und eine Dicke der wolframkonzentrierten Schicht 10 nm oder mehr und 100 nm oder weniger beträgt.

8. Metallverbundhydroxid nach Anspruch 7, wobei eine durchschnittliche Teilchengröße des Metallverbundhydroxids 4,0 µm oder mehr und 9,0 µm oder weniger beträgt und [(d90 - d10)/durchschnittliche Teilchengröße], ein Index, der die Streuung der Teilchengrößenverteilung angibt, 0,65 oder weniger beträgt.

9. Metallverbundhydroxid nach Anspruch 7 oder 8, wobei die Sekundärteilchen eine Hohlstruktur aufweisen und die Klopfdichte des Metallverbundhydroxids 1,2 g/cm³ oder mehr und 1,9 g/cm³ oder weniger beträgt.

10. Verfahren zur Herstellung eines aktiven Materials für eine positive Elektrode für eine Sekundärbatterie mit nichtwässrigem Elektrolyten, wobei das Verfahren umfasst:
einen Prozess des Erhaltens eines Lithiumgemischs durch Vermengen einer Lithiumverbindung mit mindestens entweder einem Metallverbundhydroxid, erhalten durch das Herstellungsverfahren nach einem der Ansprüche 1 bis 6, oder einem Metallverbundoxid, erhalten durch das Unterziehen des Metallverbundhydroxids, erhalten durch das Herstellungsverfahren nach einem der Ansprüche 1 bis 6, einer thermischen Behandlung; und
einen Prozess des Erhaltens eines Lithium-Metall-Verbundoxids durch Brennen des Lithiumgemischs.

11. Aktives Material für eine positive Elektrode für eine Sekundärbatterie mit nichtwässrigem Elektrolyten, erhalten durch das Verfahren zur Herstellung eines aktiven Materials für eine positive Elektrode für eine Sekundärbatterie mit nichtwässrigem Elektrolyten nach Anspruch 10, wobei das aktive Material für die positive Elektrode umfasst: ein Lithium-Metall-Verbundoxid, das Lithium, Nickel, Mangan und Wolfram sowie optional Kobalt und ein Element M enthält und ein Atomzahlenverhältnis der jeweiligen Metallelemente, dargestellt durch Li : Ni : Mn : Co : W : M = 1 + u : x : y : z : a : b, wobei x + y + z = 1, -0,05 ≤ u ≤ 0,50, 0,3 ≤ x ≤ 0,95, 0,05 ≤ y ≤ 0,55, 0 ≤ z ≤ 0,4, 0 < a ≤ 0,1, 0 ≤ b ≤ 0,1 und M ein oder mehrere Elemente ist, ausgewählt aus Mg, Ca, Al, Ti, V, Cr, Zr, Nb, Mo, Hf und Ta, und eine Hohlstruktur mit einer Klopfdichte von 1,2 g/cm³ oder mehr und 1,99 g/cm³ oder weniger aufweist, wobei
das Lithium-Metall-Verbundoxid Sekundärteilchen umfasst, gebildet durch eine Aggregation einer Mehrzahl von Primärteilchen, und eine Wolfram und Lithium enthaltende Verbindung in einem konzentrierten Zustand auf einer Oberflächenschicht von Primärteilchen, die auf einer Oberfläche oder im Inneren der Sekundärteilchen vorliegen, und an einer Korngrenze zwischen den Primärteilchen vorliegt.

12. Aktives Material für eine positive Elektrode für eine Sekundärbatterie mit nichtwässrigem Elektrolyten nach Anspruch 11, wobei ein durch Pulverröntgendiffraktionsmessung ermittelter Kristallitdurchmesser der (003)-Ebene 120 nm oder mehr beträgt.

13. Sekundärbatterie mit nichtwässrigem Elektrolyten, umfassend: eine positive Elektrode; eine negative Elektrode; einen Separator; und einen nichtwässrigen Elektrolyten, wobei das aktive Material für eine positive Elektrode für eine Sekundärbatterie mit nichtwässrigem Elektrolyten nach Anspruch 11 oder 12 als ein Material für eine positive Elektrode der positiven Elektrode verwendet wird.

## Revendications

1. Procédé de production d'un hydroxyde composite métallique qui contient du nickel, du manganèse et du tungstène et en option du cobalt et un élément M, et a un rapport du nombre d'atomes des éléments métalliques respectifs représenté par Ni/Mn/Co/W/M = x/y/z/a/b, dans lequel x + y + z = 1, 0,3 ≤ x ≤ 0,95, 0,05 ≤ y ≤ 0,55, 0 ≤ z ≤ 0,4, 0 < a ≤ 0,1, 0 ≤ b ≤ 0,1, et M est un ou plusieurs éléments sélectionnés parmi Mg, Ca, Al, Ti, V, Cr, Zr, Nb, Mo, Hf et Ta, le procédé comprenant :
un premier processus de cristallisation consistant à obtenir des premières particules d'hydroxyde composite métallique en fournissant une première solution aqueuse de matière première contenant au moins un parmi les éléments métalliques et un donneur d'ion ammonium à un réservoir réactionnel, ajustant un pH d'une solution aqueuse réactionnelle dans le réservoir réactionnel et réalisant une réaction de cristallisation ; et
un second processus de cristallisation consistant à former une couche concentrée en tungstène sur une surface des premières particules d'hydroxyde composite métallique et obtenir des secondes particules d'hydroxyde composite métallique en fournissant une seconde solution aqueuse de matière première contenant au moins un parmi les éléments métalliques et une quantité supérieure de tungstène à la première solution aqueuse de matière première et un donneur d'ion ammonium à une solution aqueuse réactionnelle contenant les premières particules d'hydroxyde composite métallique, ajustant un pH de la solution aqueuse réactionnelle et réalisant une réaction de cristallisation ; dans lequel le premier processus de cristallisation inclut un processus de génération nucléaire consistant à réaliser une génération nucléaire et un processus de croissance particulaire consistant à réaliser une croissance particulaire, et le second processus de cristallisation inclut réaliser une croissance particulaire à la suite du processus de croissance particulaire dans le premier processus de cristallisation ; et
le second processus de cristallisation inclut former la couche concentrée en tungstène de manière à avoir une épaisseur de 10 nm ou plus et 100 nm ou moins dans une direction allant d'une direction des secondes particules d'hydroxyde composite métallique vers un centre.

2. Procédé de production d'un hydroxyde composite métallique selon la revendication 1, dans lequel
la croissance particulaire dans le premier processus de cristallisation et le second processus de cristallisation inclut ajuster un pH de la solution aqueuse réactionnelle pour être inférieur à une valeur de pH de la solution aqueuse réactionnelle dans le processus de génération nucléaire et est réalisée dans une atmosphère non oxydante ayant une concentration en oxygène de 1 % en vol. ou moins.

3. Procédé de production d'un hydroxyde composite métallique selon la revendication 1 ou 2, dans lequel la génération nucléaire dans le premier processus de cristallisation est réalisée dans une atmosphère oxydante ayant une concentration en oxygène de plus de 1 % en vol.

4. Procédé de production d'un hydroxyde composite métallique selon l'une quelconque des revendications 1 à 3, dans lequel l'addition de la seconde solution aqueuse de matière première dans le second processus de cristallisation est réalisée à un instant auquel 50 % ou plus et 95 % ou moins de la durée entière au cours de laquelle la croissance particulaire est réalisée s'écoulent dans les premier et second processus de cristallisation.

5. Procédé de production d'un hydroxyde composite métallique selon l'une quelconque des revendications 1 à 4, dans lequel la fourniture de la seconde solution aqueuse de matière première est réalisée en fournissant séparément la première solution aqueuse de matière première et une solution aqueuse contenant du tungstène à la solution aqueuse réactionnelle.

6. Procédé de production d'un hydroxyde composite métallique selon la revendication 5, dans lequel une concentration en tungstène dans la solution aqueuse contenant du tungstène est de 0,1 mol/l ou plus.

7. Hydroxyde composite métallique comprenant : du nickel, du manganèse et du tungstène et en option du cobalt et un élément M, et ayant un rapport du nombre d'atomes des éléments métalliques respectifs représenté par Ni/Mn/Co/W/M = x/y/z/a/b, dans lequel x + y + z = 1, 0,3 ≤ x ≤ 0,95, 0,05 ≤ y ≤ 0,55, 0 ≤ z ≤ 0,4, 0 < a ≤ 0,1, 0 ≤ b ≤ 0,1, et M est un ou plusieurs éléments sélectionnés parmi Mg, Ca, Al, Ti, V, Cr, Zr, Nb, Mo, Hf et Ta, dans lequel
l'hydroxyde composite métallique inclut des particules secondaires formées par agrégation d'une pluralité de particules primaires, l'hydroxyde composite métallique a une couche concentrée en tungstène sur une couche superficielle des particules secondaires, et une épaisseur de la couche concentrée en tungstène est de 10 nm ou plus et 100 nm ou moins.

8. Hydroxyde composite métallique selon la revendication 7, dans lequel une taille particulaire moyenne de l'hydroxyde composite métallique est de 4,0 µm ou plus et 9,0 µm ou moins et [(d90 - d10)/taille particulaire moyenne], qui est un indice indiquant la dispersion de la distribution de tailles particulaires, est de 0,65 ou moins.

9. Hydroxyde composite métallique selon la revendication 7 ou 8, dans lequel les particules secondaires ont une structure creuse et une masse volumique après tassement de l'hydroxyde composite métallique est de 1,2 g/cm³ ou plus et 1,9 g/cm³ ou moins.

10. Procédé de production d'un matériau actif d'électrode positive pour une batterie rechargeable à électrolyte non aqueux, le procédé comprenant :
un processus consistant à obtenir un mélange de lithium en mélangeant un composé de lithium à au moins l'un ou l'autre d'un hydroxyde composite métallique obtenu par le procédé de production selon l'une quelconque des revendications 1 à 6 ou d'un oxyde composite métallique obtenu en soumettant l'hydroxyde composite métallique obtenu par le procédé de production selon l'une quelconque des revendications 1 à 6 à un traitement thermique ; et
un processus consistant à obtenir un oxyde composite de lithium-métal en allumant le mélange de lithium.

11. Matériau actif d'électrode positive pour une batterie rechargeable à électrolyte non aqueux obtenu par le procédé de production d'un matériau actif d'électrode positive pour une batterie rechargeable à électrolyte non aqueux selon la revendication 10, le matériau actif d'électrode positive comprenant : un oxyde composite de lithium-métal qui contient du lithium, du nickel, du manganèse et du tungstène et en option du cobalt et un élément M, et a un rapport du nombre d'atomes des éléments métalliques respectifs représenté par Li/Ni/Mn/Co/W/M = 1 + u/x/y/z/a/b, dans lequel x + y + z = 1, -0,05 ≤ u ≤ 0,50, 0,3 ≤ x ≤ 0,95, 0,05 ≤ y ≤ 0,55, 0 ≤ z ≤ 0,4, 0 < a ≤ 0,1, 0 ≤ b ≤ 0,1, et M est un ou plusieurs éléments sélectionnés parmi Mg, Ca, Al, Ti, V, Cr, Zr, Nb, Mo, Hf et Ta, et une structure creuse ayant une masse volumique après tassement de 1,2 g/cm³ ou plus et 1,9 g/cm³ ou moins, dans lequel
l'oxyde composite de lithium-métal inclut des particules secondaires formées par agrégation d'une pluralité de particules primaires et un composé contenant du tungstène et du lithium est présent, dans un état concentré, sur une couche superficielle des particules primaires présentes sur une surface ou à l'intérieur des particules secondaires et à une limite de grain entre les particules primaires.

12. Matériau actif d'électrode positive pour une batterie rechargeable à électrolyte non aqueux selon la revendication 11, dans lequel un diamètre de cristallite du plan (003) atteint par mesure de diffraction aux rayons X est de 120 nm ou plus.

13. Batterie rechargeable à électrolyte non aqueux comprenant : une électrode positive ; une électrode négative ; un séparateur ; et un électrolyte non aqueux, dans laquelle le matériau actif d'électrode positive pour une batterie rechargeable à électrolyte non aqueux selon la revendication 11 ou 12 est utilisé en tant que matériau d'électrode positive de l'électrode positive.
